# EUROPEAN PATENT APPLICATION

(11) **EP 4 772 089 A1**
(43) Date of publication of application: **08.07.2026**
(21) Application number: 25225076.6
(22) Date of filing: 18.12.2025
(51) Int. Cl.: A47J 37/06

(54) **AIR FRYER**

(30) Priority: 04.01.2025 CN 202510011538; 04.01.2025 CN 202520020557 U; 15.03.2025 CN 202520456231 U; 24.03.2025 CN 202520524934 U
(71) Applicant: Ningbo Careline Electric Appliance Co., Ltd., Ningbo, Zhejiang 315000 (CN)
(72) Inventor: ZHANG, Yichi, Ningbo City, 315000 (CN); BAI, Rongjie, Ningbo City, 315000 (CN); HUANG, Chengzhou, Ningbo City, 315000 (CN); PAN, Huayuan, Ningbo City, 315000 (CN); LI, Chao, Ningbo City, 315000 (CN); YANG, Chao, Ningbo City, 315000 (CN); CUI, Jianqiang, Ningbo City, 315000 (CN)
(74) Representative: Meyer-Dulheuer MD Legal Patentanwälte PartG mbB

(57) **Abstract**

The present disclosure relates to air fryer, comprising a main body, the main body is provided with a first cooking cavity and a second cooking cavity arranged at intervals up and down. By arranging the first cooking cavity and the second cooking cavity in the main body at intervals up and down, not only can two types of food be cooked simultaneously to improve food cooking efficiency, but also the lateral volume of the air fryer can be reduced, the space occupancy of the air fryer can be lowered, and the space utilization rate can be improved. Meanwhile, the two cooking cavities are hermetically isolated, which can also avoid the interference between the air intake and air outlet of the first cooking cavity and the second cooking cavity, effectively improve the thermal circulation efficiency in the first cooking cavity and the second cooking cavity, thereby enhancing the cooking efficiency and effectively improving the user experience.

## Description

### CROSS REFERENCE TO RELATED APPLICATIONS

The present disclosure claims priorities to the Chinese patent application No. 2025100115380 filed to the China Patent Office on January 4, 2025 and entitled "A Dual-Core Air Fryer with Upper and Lower Chambers", and the Chinese patent application No. 2025200205575 filed to the China Patent Office on January 4, 2025 and entitled "An Air Fryer with Excellent Cooking Performance", and the Chinese patent application No. 2025204562317 filed to the China Patent Office on March 15, 2025 and entitled "A Side-Air Intake Dual-Core Air Fryer with Upper and Lower Chambers", and the Chinese patent application No. 2025205249349 filed to the China Patent Office on March 24, 2025 and entitled "A Safe-to-Use Air Fryer", the entire contents of which are incorporated herein by reference.

### TECHNICAL FIELD

The present disclosure relates to the technical field of kitchen household appliances and cooking appliances, in particular to an air fryer.

### BACKGROUND

With the improvement of people's living standards, the oil-free cooking method of air fryers has become increasingly popular. However, most existing air fryers are single-pot air fryers, i.e., having only one cooking cavity and one fry basket. Such air fryers can only cook one type of food at a time, resulting in slow cooking speed, low cooking efficiency, and poor user experience. To meet user needs, a type of dual-pot air fryer has appeared on the market, most of these air fryers have one cooking cavity and two fry baskets arranged side by side in the cooking cavity, enabling simultaneous cooking of two types of food. However, since only one frying and baking assembly is provided in the cooking cavity, the cooking speed is slow and the cooking efficiency is low. Moreover, the side-by-side arrangement of the two fry baskets increases the lateral volume of the air fryer, occupying a large desktop area with high space occupancy and poor user experience.

### SUMMARY

The present invention provides an air fryer, comprising a main body, wherein the main body is provided with a first cooking cavity and a second cooking cavity arranged at intervals up and down, characterized in that:
a first air guide cover having a first inner concave cavity is provided at the rear side of the first cooking cavity; a first thermal circulation fan is arranged in the first inner concave cavity; the first inner concave cavity extends upward to the upper part of the first cooking cavity and communicates with the upper part of the first cooking cavity; a first ventilation opening corresponding to the first thermal circulation fan is provided on the rear side wall of the first cooking cavity; a first sealing member surrounding the first inner concave cavity is provided on the first air guide cover; the first air guide cover is in sealing fit with the rear side wall of the first cooking cavity through the first sealing member;
a second air guide cover having a second inner concave cavity is provided at the rear side of the second cooking cavity; a second thermal circulation fan is arranged in the second inner concave cavity; the second inner concave cavity extends upward to the upper part of the second cooking cavity and communicates with the upper part of the second cooking cavity; a second ventilation opening corresponding to the second thermal circulation fan is provided on the rear side wall of the second cooking cavity; a second sealing member surrounding the second inner concave cavity is provided on the second air guide cover; the second air guide cover is in sealing fit with the rear side wall of the second cooking cavity through the second sealing member.

In one or more embodiments, a first air duct plate is provided at the top of the first cooking cavity; a first air guiding cavity with a downward opening is formed in the first air duct plate; the rear side of the first air duct plate extends into the first inner concave cavity; a first air inlet is provided at the rear side of the first air guiding cavity; the first air guiding cavity is adapted to communicate with the first inner concave cavity through the first air inlet; a second air duct plate is provided at the top of the second cooking cavity; a second air guiding cavity with a downward opening is formed in the second air duct plate; the rear side of the second air duct plate extends into the second inner concave cavity; a second air inlet is provided at the rear side of the second air guiding cavity; the second air guiding cavity is adapted to communicate with the second inner concave cavity through the second air inlet.

In one or more embodiments, the rear side wall of the first cooking cavity and the rear side wall of the second cooking cavity are an integrally formed integral rear side wall structure; a second air duct plate installation opening is provided at the position of the integral rear side wall corresponding to the rear side of the second air duct plate; the rear side of the second air duct plate passes through the second air duct plate installation opening and extends into the second inner concave cavity; a protruding positioning column is provided at the rear side of the second air duct plate; a positioning hole matching the positioning column is provided on the integral rear side wall; the first air guide cover and the second air guide cover are an integrally formed air guide cover plate structure; the air guide cover plate is stamped at intervals up and down to form the first inner concave cavity and the second inner concave cavity; the integral rear side wall is fixedly connected with the air guide cover plate through fasteners.

In one or more embodiments, the projections of the first thermal circulation fan and the first air inlet on the rotation axis of the first thermal circulation fan at least partially overlap; a first air guiding fin is provided in the first air guiding cavity adjacent to the first air inlet; the first air guiding fin extends arcuately toward the middle of the first air guiding cavity; the bending direction of the first air guiding fin is opposite to the rotation direction of the first thermal circulation fan; the projections of the second thermal circulation fan and the second air inlet on the rotation axis of the second thermal circulation fan at least partially overlap; a second air guiding fin is provided in the second air guiding cavity adjacent to the second air inlet; the second air guiding fin extends arcuately toward the middle of the second air guiding cavity; the bending direction of the second air guiding fin is opposite to the rotation direction of the second thermal circulation fan.

In one or more embodiments, a first flow guiding protrusion protruding downward is provided in the middle of the first air guiding cavity; the width of the first flow guiding protrusion is designed to gradually increase at least in part from the end close to the rear side to the end close to the front side; the first flow guiding protrusion is inclined in the front-rear extension direction; the rear side of the first flow guiding protrusion is inclined toward the rotation direction of the first thermal circulation fan; a first heating element arranged around the first flow guiding protrusion is provided in the first air guiding cavity; a second flow guiding protrusion protruding downward is provided in the middle of the second air guiding cavity; the width of the second flow guiding protrusion is designed to gradually increase at least in part from the end close to the rear side to the end close to the front side; the second flow guiding protrusion is inclined in the front-rear extension direction; the rear side of the second flow guiding protrusion is inclined toward the rotation direction of the second thermal circulation fan; a second heating element arranged around the second flow guiding protrusion is provided in the second air guiding cavity.

In one or more embodiments, a first annular surrounding plate surrounding the first inner concave cavity is provided on the first air guide cover; a first inner groove is provided on the first sealing member; the first sealing member is clamped on the first annular surrounding plate through the first inner groove; a first protruding part corresponding to the first sealing member is provided on at least part of the rear side wall of the first cooking cavity; the first sealing member is at least partially in sealing fit with the first protruding part; and/or,
a second annular surrounding plate surrounding the second inner concave cavity is provided on the second air guide cover; a second inner groove is provided on the second sealing member; the second sealing member is clamped on the second annular surrounding plate through the second inner groove; a second protruding part corresponding to the second sealing member is provided on at least part of the rear side wall of the second cooking cavity; the second sealing member is at least partially in sealing fit with the second protruding part.

In one or more embodiments, a first fry basket with an open top is arranged in the first cooking cavity; a first ventilation hole communicating with the first ventilation opening is provided on the side wall of the first fry basket; a second fry basket with an open top is arranged in the second cooking cavity; a second ventilation hole communicating with the second ventilation opening is provided on the side wall of the second fry basket; the circulating hot air generated by the first hot air circulation system and the second hot air circulation system is adapted to enter the first fry basket and the second fry basket from the open tops of the first fry basket and the second fry basket through the first air inlet and the second air inlet respectively, and flow back to the first inner concave cavity and the second inner concave cavity through the first ventilation hole, the first ventilation opening, the second ventilation hole, and the second ventilation opening respectively.

In one or more embodiments, a first frying plate with through holes is suspended in the first fry basket; the first ventilation hole is located below the first frying plate; a second frying plate with through holes is suspended in the second fry basket; the second ventilation hole is located below the second frying plate; a first accommodating groove and a second accommodating groove recessed downward are respectively provided in the middle of the first frying plate and the second frying plate; the side parts of the first accommodating groove and the second accommodating groove are closed structures; a plurality of the through holes are provided at the bottom; the first air guiding cavity is at least partially corresponding to the open top of the first fry basket; a first flow guiding protrusion protruding downward is provided in the middle of the first air guiding cavity; the first flow guiding protrusion is located directly above the open top of the first fry basket; the first hot air circulation system includes a first heating element; the first heating element is adapted to be arranged in the first air guiding cavity and around the first flow guiding protrusion; the second air guiding cavity is at least partially corresponding to the open top of the second fry basket; a second flow guiding protrusion protruding downward is provided in the middle of the second air guiding cavity; the second flow guiding protrusion is located directly above the open top of the second fry basket; the second hot air circulation system includes a second heating element; the second heating element is adapted to be arranged in the second air guiding cavity and around the second flow guiding protrusion.

In one or more embodiments, a first recessed part recessed inward is provided at the lower part of the side wall of the first fry basket; the first ventilation hole is provided on the first recessed part; a first hot air gap communicating with the first ventilation opening is formed between the first recessed part and the inner wall of the first cooking cavity; a second recessed part recessed inward is provided at the lower part of the side wall of the second fry basket; the second ventilation hole is provided on the second recessed part; a second hot air gap communicating with the second ventilation opening is adapted to be formed between the second recessed part and the inner wall of the second cooking cavity.

In one or more embodiments, the first air guiding fin is adapted to be arranged on the side of the first air guiding cavity biased toward the rotation direction of the first thermal circulation fan, a plurality of bendable bending parts are provided on the first air guiding fin; a plurality of fixing holes for the bending parts to pass through are provided on the first air duct plate; the bending parts are adapted to pass through the fixing holes from the bottom of the first air duct plate and be bent to abut against the top of the first air duct plate.

In one or more embodiments, a notch is provided at the end of the first air guiding fin close to the first air inlet; the notch is adapted to be an arc-shaped inner concave structure extending obliquely inward from the end of the first air guiding fin close to the first air duct plate to the end far away from the first air duct plate; and/or,
the side wall of the first air guiding cavity opposite to the first air inlet protrudes toward the first flow guiding protrusion to form a flow guiding part.

In one or more embodiments, a first inner concave cavity and a first heat dissipation air cavity are sequentially provided at the rear side of the first cooking cavity; the first inner concave cavity communicates with the first cooking cavity; a first thermal circulation fan is arranged in the first inner concave cavity; a first hot air outlet is provided on the side wall of the first inner concave cavity opposite to the first thermal circulation fan; a first air outlet is provided on the side wall of the main body corresponding to the first hot air outlet; a first air outlet channel communicating with the first hot air outlet and the first air outlet is provided in the main body; a first heat dissipation fan is arranged in the first heat dissipation air cavity; the first heat dissipation air cavity is provided with a first cold air outlet communicating with the first air outlet channel; a second inner concave cavity and a second heat dissipation air cavity are sequentially provided at the rear side of the second cooking cavity; the second inner concave cavity communicates with the second cooking cavity; a second thermal circulation fan is arranged in the second inner concave cavity; a second hot air outlet is provided on the side wall of the second inner concave cavity opposite to the second thermal circulation fan; a second air outlet is provided on the side wall of the main body corresponding to the second hot air outlet; a second air outlet channel communicating with the second hot air outlet and the second air outlet is provided in the main body; a second heat dissipation fan is arranged in the second heat dissipation air cavity; the second heat dissipation air cavity is provided with a second cold air outlet communicating with the second air outlet channel.

In one or more embodiments, a first enclosure forming at least part of the first heat dissipation air cavity is provided outside the first heat dissipation fan; the first cold air outlet is provided on the first enclosure; a second enclosure forming at least part of the second heat dissipation air cavity is provided outside the second heat dissipation fan; the second cold air outlet is provided on the second enclosure; the projections of the first cold air outlet and the first heat dissipation fan on the rotation axis of the first heat dissipation fan at least partially overlap; the projections of the second cold air outlet and the second heat dissipation fan on the rotation axis of the second heat dissipation fan at least partially overlap.

In one or more embodiments, a first installation cavity communicating with the first heat dissipation air cavity is provided at the rear side of the first heat dissipation air cavity; a first drive system is arranged in the first installation cavity; the first drive system is adapted to extend to be drivingly connected with the first thermal circulation fan and the first heat dissipation fan; a second installation cavity communicating with the second heat dissipation air cavity is provided at the rear side of the second heat dissipation air cavity; a second drive system is arranged in the second installation cavity; the second drive system is adapted to extend to be drivingly connected with the second thermal circulation fan and the second heat dissipation fan; a first cold air inlet and a second cold air inlet communicating with the first installation cavity and the second installation cavity respectively are arranged at intervals up and down at the rear side of the main body; the first cold air inlet and the second cold air inlet are adapted to correspond to at least part of the first drive system and the second drive system; a protruding part protruding outward for covering the first drive system and the second drive system is provided at the rear side of the main body; the first cold air inlet and the second cold air inlet are provided on the protruding part and located at the rear side of the protruding part; vertically extending arc-shaped transition surfaces are provided on both sides of the rear side wall of the main body adjacent to the protruding part; the first air outlet and the second air outlet are arranged at intervals up and down on the transition surfaces.

In one or more embodiments, an air outlet assembly made of high-temperature resistant material is provided in the main body; the air outlet assembly includes a first air outlet assembly and a second air outlet assembly; the first air outlet channel is provided in the first air outlet assembly; the second air outlet channel is provided in the second air outlet assembly; the first air outlet assembly and the second air outlet assembly are adapted to be an integrally formed structure; and/or,
a heat dissipation air duct communicating with the first heat dissipation air cavity and the second heat dissipation cavity is provided in the main body; the heat dissipation air duct is adapted to be arranged around at least part of the first cooking cavity and the second cooking cavity; a first ventilation opening and a second ventilation opening communicating with the atmosphere are respectively provided at both ends of the heat dissipation air duct; the first ventilation opening is arranged around the peripheral edge of the top of the main body; the second ventilation opening is provided at the bottom of the main body.

### BRIEF DESCRIPTION OF THE DRAWINGS

In order to describe technical solutions in specific implementations of the present disclosure or in the prior art more clearly, the accompanying drawings that need to be used in the description of the specific implementations or the prior art will be briefly introduced below. Apparently, the accompanying drawings in the following description are some implementations of the present disclosure, and for those of ordinary skill in the art, on the premise of no creative labor, other accompanying drawings may also be obtained from these accompanying drawings.
FIG. 1 is a front view of the first embodiment of the present application.
FIG. 2 is an overall cross-sectional view from a first perspective of the first embodiment of the present application.
FIG. 3 is an exploded schematic view of a partial structure of the first embodiment of the present application.
FIG. 4 is a schematic view of a partial structure of the first embodiment of the present application.
FIG. 5 is a flow guiding schematic view of the first embodiment of the present application.
FIG. 6 is an exploded schematic view of an air duct plate structure of the first embodiment of the present application.
FIG. 7 is a schematic view of a fry basket structure of the first embodiment of the present application.
FIG. 8 is an overall cross-sectional view of FIG. 7.
FIG. 9 is an overall cross-sectional view from a second perspective of the first embodiment of the present application.
FIG. 10 is an overall cross-sectional view from a third perspective of the first embodiment of the present application.
FIG. 11 is a front view of the second embodiment of the present application.
FIG. 12 is a longitudinal cross-sectional view of the second embodiment of the present application.
FIG. 13 is a partially enlarged schematic view of the second embodiment of the present application.
FIG. 14 is a top schematic view of the first cooking cavity of the second embodiment of the present application.
FIG. 15 is a schematic view of the first fry basket of the second embodiment of the present application.
FIG. 16 is a cross-sectional view of the first fry basket of the second embodiment of the present application.
FIG. 17 is a transverse cross-sectional view from a first perspective of the second embodiment of the present application.
FIG. 18 is a top schematic view of the second cooking cavity of the second embodiment of the present application.
FIG. 19 is a schematic view of the second fry basket of the second embodiment of the present application.
FIG. 20 is a cross-sectional view of the second fry basket of the second embodiment of the present application.
FIG. 21 is a transverse cross-sectional view from a second perspective of the second embodiment of the present application.
FIG. 22 is a front view of the air fryer of the third embodiment of the present application.
FIG. 23 is an overall structural cross-sectional view of the third embodiment of the present application.
FIG. 24 is a flow guiding schematic view of the third embodiment of the present application.
FIG. 25 is an exploded schematic view of a partial structure of the third embodiment of the present application.
FIG. 26 is a partial structure installation schematic view of the third embodiment of the present application.
FIG. 27 is a front view of the air fryer of the fourth embodiment of the present application.
FIG. 28 is an overall cross-sectional view from a first perspective of the fourth embodiment of the present application.
FIG. 29 is a partial cross-sectional view of the fourth embodiment of the present application.
FIG. 30 is an overall cross-sectional view from a second perspective of the fourth embodiment of the present application.
FIG. 31 is a schematic view of a partial structure of the fourth embodiment of the present application.

### DETAILED DESCRIPTION

The present application provides air fryer to solve the technical problems of existing air fryers, such as low cooking efficiency, high space occupancy, and poor user experience.

In order to solve the above technical problems, the present application provides air fryer, comprising a main body, the main body is provided with a first cooking cavity and a second cooking cavity arranged at intervals up and down, a first air guide cover having a first inner concave cavity is provided at the rear side of the first cooking cavity, a first thermal circulation fan is arranged in the first inner concave cavity, the first inner concave cavity extends upward to the upper part of the first cooking cavity and communicates with the upper part of the first cooking cavity, a first ventilation opening corresponding to the first thermal circulation fan is provided on the rear side wall of the first cooking cavity, a first sealing member surrounding the first inner concave cavity is provided on the first air guide cover, and the first air guide cover is in sealing fit with the rear side wall of the first cooking cavity through the first sealing member; a second air guide cover having a second inner concave cavity is provided at the rear side of the second cooking cavity, a second thermal circulation fan is arranged in the second inner concave cavity, the second inner concave cavity extends upward to the upper part of the second cooking cavity and communicates with the upper part of the second cooking cavity, a second ventilation opening corresponding to the second thermal circulation fan is provided on the rear side wall of the second cooking cavity, a second sealing member surrounding the second inner concave cavity is provided on the second air guide cover, and the second air guide cover is in sealing fit with the rear side wall of the second cooking cavity through the second sealing member. By arranging the first cooking cavity and the second cooking cavity in the main body at intervals up and down, not only can two types of food be cooked simultaneously to improve food cooking efficiency, but also the lateral volume of the air fryer can be reduced, the space occupancy of the air fryer can be lowered, and the space utilization rate can be improved. Meanwhile, by separately arranging the first thermal circulation fan, the first air guide cover, the second thermal circulation fan, and the second air guide cover outside the first cooking cavity and the second cooking cavity, the circulating hot air generated by the first thermal circulation fan and the second thermal circulation fan can be better introduced into the first cooking cavity and the second cooking cavity to heat the food in the first cooking cavity and the second cooking cavity. Moreover, the air intake and air outlet of the first cooking cavity and the second cooking cavity do not interfere with each other, which effectively improves the thermal circulation efficiency in the first cooking cavity and the second cooking cavity, thereby enhancing the cooking efficiency and effectively improving the user experience. In addition, by arranging the first sealing member between the first air guide cover and the rear side wall of the first cooking cavity, and the second sealing member between the second air guide cover and the rear side wall of the second cooking cavity, the sealing fit between the first air guide cover and the rear side wall of the first cooking cavity as well as between the second air guide cover and the rear side wall of the second cooking cavity can be achieved. This effectively prevents the circulating hot air in the first inner concave cavity and the second inner concave cavity from leaking out of the first inner concave cavity and the second inner concave cavity, thereby avoiding affecting the normal operation of electrical components outside the first inner concave cavity and the second inner concave cavity, ensuring the normal operation of the electrical components outside the first inner concave cavity and the second inner concave cavity, and improving the performance stability and use safety of the air fryer.

In an optional embodiment, a first air duct plate is provided at the top of the first cooking cavity, a first air guiding cavity with a downward opening is formed in the first air duct plate, the rear side of the first air duct plate extends into the first inner concave cavity, a first air inlet is provided at the rear side of the first air guiding cavity, and the first air guiding cavity is adapted to communicate with the first inner concave cavity through the first air inlet, a second air duct plate is provided at the top of the second cooking cavity, a second air guiding cavity with a downward opening is formed in the second air duct plate, the rear side of the second air duct plate extends into the second inner concave cavity, a second air inlet is provided at the rear side of the second air guiding cavity, and the second air guiding cavity is adapted to communicate with the second inner concave cavity through the second air inlet. By extending the rear sides of the first air duct plate and the second air duct plate into the first inner concave cavity and the second inner concave cavity respectively, and arranging the first air guiding cavity and the second air guiding cavity with downward openings in the first air duct plate and the second air duct plate respectively, which communicate with the first inner concave cavity and the second inner concave cavity, the circulating hot air generated by the first thermal circulation fan and the second thermal circulation fan can be introduced into the first air guiding cavity and the second air guiding cavity through the first air inlet and the second air inlet respectively, and then guided downward into the first cooking cavity and the second cooking cavity by the first air guiding cavity and the second air guiding cavity to cook the food in the first cooking cavity and the second cooking cavity. This not only prevents the circulating hot air generated by the first thermal circulation fan and the second thermal circulation fan from directly blowing into the first cooking cavity and the second cooking cavity, which may cause the food in the first cooking cavity and the second cooking cavity to burn, but also effectively ensures the cooking effect of the food in the first cooking cavity and the second cooking cavity. In addition, the extending parts of the first air duct plate and the second air duct plate can better introduce the circulating hot air generated by the first thermal circulation fan and the second thermal circulation fan into the first air guiding cavity and the second air guiding cavity, effectively improving the thermal circulation efficiency in the first cooking cavity and the second cooking cavity, thereby enhancing the cooking efficiency of the air fryer.

In an optional embodiment, the rear side wall of the first cooking cavity and the rear side wall of the second cooking cavity are an integrally formed integral rear side wall structure, a second air duct plate installation opening is provided at the position of the integral rear side wall corresponding to the rear side of the second air duct plate, and the rear side of the second air duct plate passes through the second air duct plate installation opening and extends into the second inner concave cavity. By arranging the rear side walls of the first cooking cavity and the second cooking cavity as an integral rear side wall structure, not only can the overall structure of the air fryer be simplified, but also the installation difficulty of the integral rear side wall can be reduced, thereby lowering the production cost and user use cost. Meanwhile, by providing the second air duct plate installation opening on the integral rear side wall, not only can the structural rationality of the air fryer be ensured, but also the positioning and/or limiting of the installation of the second air duct plate can be achieved to reduce the installation difficulty of the second air duct plate and ensure the connection stability between the second air duct plate and the integral rear side wall as well as the structural stability of the air fryer.

In an optional embodiment, a protruding positioning column is provided at the rear side of the second air duct plate, and a positioning hole matching the positioning column is provided on the integral rear side wall, the positioning column and the positioning hole are adapted to position and/or limit the installation of the second air duct plate. Through the positioning column and the positioning hole, not only can the installation difficulty of the second air duct plate be reduced, but also the connection strength and connection stability between the second air duct plate and the integral rear side wall can be improved, effectively ensuring the performance stability of the air fryer.

In an optional embodiment, the first air guide cover and the second air guide cover are an integrally formed air guide cover plate structure, the air guide cover plate is stamped at intervals up and down to form the first inner concave cavity and the second inner concave cavity, the integral rear side wall is fixedly connected with the air guide cover plate through fasteners. Such an arrangement not only simplifies the structures of the first air guide cover and the second air guide cover, reduces the installation difficulty of the first air guide cover and the second air guide cover, thereby lowering the production cost and user use cost, but also improves the connection strength and connection stability between the integral rear side wall and the air guide cover plate, effectively ensuring the performance stability of the air fryer.

In an optional embodiment, the projections of the first thermal circulation fan and the first air inlet on the rotation axis of the first thermal circulation fan at least partially overlap. When the projections of the first thermal circulation fan and the first air inlet on the rotation axis of the first thermal circulation fan overlap, the first air inlet is directly opposite the outer side of the first thermal circulation fan. Such an arrangement enables the circulating hot air generated by the first thermal circulation fan to enter the first air inlet better and faster, so as to improve the thermal circulation efficiency in the first cooking cavity, thereby enhancing the cooking efficiency. The projections of the second thermal circulation fan and the second air inlet on the rotation axis of the second thermal circulation fan at least partially overlap. When the projections of the second thermal circulation fan and the second air inlet on the rotation axis of the second thermal circulation fan overlap, the second air inlet is directly opposite the outer side of the second thermal circulation fan. Such an arrangement enables the circulating hot air generated by the second thermal circulation fan to enter the second air inlet better and faster, so as to improve the thermal circulation efficiency in the second cooking cavity, thereby enhancing the cooking efficiency.

In an optional embodiment, a first air guiding fin is provided in the first air guiding cavity adjacent to the first air inlet, the first air guiding fin extends arcuately toward the middle of the first air guiding cavity, and the bending direction of the first air guiding fin is opposite to the rotation direction of the first thermal circulation fan; a second air guiding fin is provided in the second air guiding cavity adjacent to the second air inlet, the second air guiding fin extends arcuately toward the middle of the second air guiding cavity, and the bending direction of the second air guiding fin is opposite to the rotation direction of the second thermal circulation fan. By respectively arranging the first air guiding fin and the second air guiding fin in the first air guiding cavity and the second air guiding cavity adjacent to the first air inlet and the second air inlet, and setting the bending directions of the first air guiding fin and the second air guiding fin to be opposite to the rotation directions of the first thermal circulation fan and the second thermal circulation fan respectively, not only can the circulating hot air entering the first air guiding cavity and the second air guiding cavity through the first air inlet and the second air inlet be split, but also the split circulating hot air can be guided to both sides of the first air guiding cavity and the second air guiding cavity respectively. Thus, the circulating hot air can be more uniformly guided downward into the first cooking cavity and the second cooking cavity through the first air guiding cavity and the second air guiding cavity to cook the food in the first cooking cavity and the second cooking cavity, which can effectively improve the cooking effect of the air fryer.

In an optional embodiment, a first flow guiding protrusion protruding downward is provided in the middle of the first air guiding cavity, the width of the first flow guiding protrusion is designed to gradually increase at least in part from the end close to the rear side to the end close to the front side; a second flow guiding protrusion protruding downward is provided in the middle of the second air guiding cavity, the width of the second flow guiding protrusion is designed to gradually increase at least in part from the end close to the rear side to the end close to the front side. By designing the first flow guiding protrusion and the second flow guiding protrusion to gradually increase in width from the end close to the rear side to the end close to the front side, the first flow guiding protrusion and the second flow guiding protrusion can better split the circulating hot air entering the first air guiding cavity and the second air guiding cavity. This not only reduces the resistance encountered by the circulating hot air when being split, thereby improving the thermal circulation efficiency of the circulating hot air in the first cooking cavity and the second cooking cavity, and further enhancing the cooking efficiency, but also reduces the noise of the air fryer during operation, effectively improving the user experience.

In an optional embodiment, the first flow guiding protrusion is inclined in the front-rear extension direction, and the rear side of the first flow guiding protrusion is inclined toward the rotation direction of the first thermal circulation fan; the second flow guiding protrusion is inclined in the front-rear extension direction, and the rear side of the second flow guiding protrusion is inclined toward the rotation direction of the second thermal circulation fan. By arranging the rear sides of the first flow guiding protrusion and the second flow guiding protrusion to be inclined toward the rotation directions of the first thermal circulation fan and the second thermal circulation fan respectively, the first flow guiding protrusion and the second flow guiding protrusion can better split the circulating hot air entering the first air guiding cavity and the second air guiding cavity, so as to reduce the problem of cooking area differentiation caused by uneven left-right splitting, and effectively improve the cooking effect of the air fryer.

In an optional embodiment, a first heating element is provided in the first air guiding cavity and arranged around the first flow guiding protrusion; a second heating element is provided in the second air guiding cavity and arranged around the second flow guiding protrusion. By respectively arranging the first heating element and the second heating element surrounding the first flow guiding protrusion and the second flow guiding protrusion in the first air guiding cavity and the second air guiding cavity, the air flow entering the first air guiding cavity and the second air guiding cavity can be well heated, avoiding the problem of cooking area differentiation caused by regional temperature differences, and effectively ensuring the cooking effect of the air fryer.

In an optional embodiment, a first annular surrounding plate surrounding the first inner concave cavity is provided on the first air guide cover, a first inner groove is provided on the first sealing member, and the first sealing member is clamped on the first annular surrounding plate through the first inner groove, the first inner groove is adapted to position and/or limit the installation of the first sealing member. By positioning and/or limiting the installation of the first sealing member through the first inner groove, not only can the installation difficulty of the first sealing member be reduced, the installation structure of the first sealing member be simplified, and the production cost and user use cost of the air fryer be lowered, but also the contact area between the first sealing member and the first air guide cover can be increased, the connection strength and connection stability between the first sealing member and the first air guide cover can be improved, and the sealing stability and sealing effect between the first air guide cover and the rear side wall of the first cooking cavity can be effectively ensured; and/or,

A second annular surrounding plate surrounding the second inner concave cavity is provided on the second air guide cover, a second inner groove is provided on the second sealing member, and the second sealing member is clamped on the second annular surrounding plate through the second inner groove, the second inner groove is adapted to position and/or limit the installation of the second sealing member. By positioning and/or limiting the installation of the second sealing member through the second inner groove, not only can the installation difficulty of the second sealing member be reduced, the installation structure of the second sealing member be simplified, and the production cost and user use cost of the air fryer be lowered, but also the contact area between the second sealing member and the second air guide cover can be increased, the connection strength and connection stability between the second sealing member and the second air guide cover can be improved, and the sealing stability and sealing effect between the second air guide cover and the rear side wall of the second cooking cavity can be effectively ensured.

In an optional embodiment, a first protruding part corresponding to the first sealing member is provided on at least part of the rear side wall of the first cooking cavity, and the first sealing member is at least partially in sealing fit with the first protruding part. By providing the first protruding part in sealing fit with at least part of the first sealing member on at least part of the rear side wall of the first cooking cavity, the contact area between the first sealing member and the rear side wall of the first cooking cavity can be increased, and the sealing stability and sealing effect between the first air guide cover and the rear side wall of the first cooking cavity can be effectively ensured; and/or,

A second protruding part corresponding to the second sealing member is provided on at least part of the rear side wall of the second cooking cavity, and the second sealing member is at least partially in sealing fit with the second protruding part. By providing the second protruding part in sealing fit with at least part of the second sealing member on at least part of the rear side wall of the second cooking cavity, the contact area between the second sealing member and the rear side wall of the second cooking cavity can be increased, and the sealing stability and sealing effect between the second air guide cover and the rear side wall of the second cooking cavity can be effectively ensured.

On the other hand, the present application provides a side-air intake dual-core air fryer with upper and lower chambers to solve the technical problems of existing air fryers, such as low cooking efficiency, high space occupancy, and poor user experience. The present application provides a side-air intake dual-core air fryer with upper and lower chambers, comprising a main body, the main body is provided with a first cooking cavity and a second cooking cavity arranged at intervals up and down, a first fry basket with an open top is arranged in the first cooking cavity, a first hot air cavity is provided at the rear side part of the first cooking cavity, a first hot air circulation system for generating circulating hot air is arranged in the first hot air cavity, a first air return hole corresponding to the first hot air circulation system is provided in the middle of the rear side wall of the first cooking cavity, a first air inlet communicating with the first hot air cavity is provided at the upper part of the rear side wall of the first cooking cavity, a first ventilation hole communicating with the first air return hole is provided on the side wall of the first fry basket; a second fry basket with an open top is arranged in the second cooking cavity, a second hot air cavity is provided at the rear side part of the second cooking cavity, a second hot air circulation system for generating circulating hot air is arranged in the second hot air cavity, a second air return hole corresponding to the second hot air circulation system is provided in the middle of the rear side wall of the second cooking cavity, a second air inlet communicating with the second hot air cavity is provided at the upper part of the rear side wall of the second cooking cavity, a second ventilation hole communicating with the second air return hole is provided on the side wall of the second fry basket, the circulating hot air generated by the first hot air circulation system and the second hot air circulation system is adapted to enter the first fry basket and the second fry basket from the open tops of the first fry basket and the second fry basket through the first air inlet and the second air inlet respectively, and flow back to the first hot air cavity and the second hot air cavity through the first ventilation hole, the first air return hole, the second ventilation hole, and the second air return hole respectively. By respectively arranging the first cooking cavity, the second cooking cavity, and the first hot air circulation system and the second hot air circulation system communicating with the first cooking cavity and the second cooking cavity in the main body, multiple types of food can be cooked simultaneously, effectively improving the cooking efficiency and cooking effect. Meanwhile, by arranging the first cooking cavity and the second cooking cavity at intervals up and down, the space occupancy of the air fryer can be effectively reduced, and the space utilization rate can be improved. In addition, by arranging the first hot air circulation system and the second hot air circulation system at the rear sides of the first cooking cavity and the second cooking cavity respectively, lateral air outlet of the first cooking cavity and the second cooking cavity can be achieved, so that the circulating hot air can better heat the food in the cavities, effectively improving the food cooking efficiency and cooking effect.

In an optional embodiment, a first frying plate with through holes is suspended in the first fry basket, and the first ventilation hole is located below the first frying plate. By suspending the first frying plate with through holes in the first fry basket and arranging the first ventilation hole below the first frying plate, not only can the food in the first fry basket be propped up to facilitate the circulating hot air to better heat the bottom of the food in the first fry basket, but also more circulating hot air can enter the lower space of the first frying plate to heat the bottom of the food in the first fry basket, effectively improving the cooking efficiency and cooking effect.

A second frying plate with through holes is suspended in the second fry basket, and the second ventilation hole is located below the second frying plate. By suspending the second frying plate with through holes in the second fry basket and arranging the second ventilation hole below the second frying plate, not only can the food in the second fry basket be propped up to facilitate the circulating hot air to better heat the bottom of the food in the second fry basket, but also more circulating hot air can enter the lower space of the second frying plate to heat the bottom of the food in the second fry basket, effectively improving the cooking efficiency and cooking effect.

In an optional embodiment, a first accommodating groove and a second accommodating groove recessed downward are respectively provided in the middle of the first frying plate and the second frying plate, the side parts of the first accommodating groove and the second accommodating groove are closed structures, and a plurality of the through holes are provided at the bottom. By respectively providing the first accommodating groove and the second accommodating groove recessed downward in the middle of the first frying plate and the second frying plate, the amount of food that can be cooked in the first fry basket and the second fry basket can be increased, and the cooking efficiency of the air fryer can be improved. Meanwhile, by setting the side parts of the first accommodating groove and the second accommodating groove as closed structures, the circulating hot air in the upper space of the first frying plate and the second frying plate can be better introduced into the lower space of the first frying plate and the second frying plate to heat the bottom of the food in the first fry basket and the second fry basket, effectively improving the cooking efficiency and cooking effect.

In an optional embodiment, the first ventilation hole is adapted to correspond to at least part of the first air return hole, and the second ventilation hole is adapted to correspond to at least part of the second air return hole. By setting the first ventilation hole and the second ventilation hole to correspond to at least part of the first air return hole and the second air return hole respectively, the circulating hot air in the first fry basket and the second fry basket can flow back to the first hot air cavity and the second hot air cavity better and faster through the first ventilation hole, the first air return hole, the second ventilation hole, and the second air return hole, effectively improving the thermal circulation efficiency of the air fryer, thereby enhancing the cooking efficiency of the air fryer.

In an optional embodiment, a first air guiding cavity with a downward opening and communicating with the first air inlet is provided at the top of the first cooking cavity, and the first air guiding cavity is at least partially corresponding to the open top of the first fry basket. By providing the first air guiding cavity corresponding to the open top of the first fry basket at the top of the first cooking cavity, the circulating hot air flowing out of the first air inlet can be guided downward into the first fry basket to heat the food in the first fry basket, which can effectively improve the cooking efficiency of the food in the first fry basket.

A second air guiding cavity with a downward opening and communicating with the second air inlet is provided at the top of the second cooking cavity, and the second air guiding cavity is at least partially corresponding to the open top of the second fry basket. By providing the second air guiding cavity corresponding to the open top of the second fry basket at the top of the second cooking cavity, the circulating hot air flowing out of the second air inlet can be guided downward into the second fry basket to heat the food in the second fry basket, which can effectively improve the cooking efficiency of the food in the second fry basket.

In an optional embodiment, a first flow guiding protrusion protruding downward is provided in the middle of the first air guiding cavity, and the first flow guiding protrusion is located directly above the open top of the first fry basket. By providing the first flow guiding protrusion corresponding to the open top of the first fry basket in the first air guiding cavity, the circulating hot air in the first air guiding cavity can be better dispersed and then more uniformly guided downward into the first fry basket to heat the food in the first fry basket, effectively improving the cooking efficiency and cooking effect.

A second flow guiding protrusion protruding downward is provided in the middle of the second air guiding cavity, and the second flow guiding protrusion is located directly above the open top of the second fry basket. By providing the second flow guiding protrusion corresponding to the open top of the second fry basket in the second air guiding cavity, the circulating hot air in the second air guiding cavity can be better dispersed and then more uniformly guided downward into the second fry basket to heat the food in the second fry basket, effectively improving the cooking efficiency and cooking effect.

In an optional embodiment, the first hot air circulation system includes a first heating element, and the first heating element is adapted to be arranged in the first air guiding cavity and around the first flow guiding protrusion. By arranging the first heating element in the first air guiding cavity and around the first flow guiding protrusion, the circulating air flow to be entered into the first fry basket can be heated better and more uniformly, effectively improving the heating efficiency and heating effect. Moreover, the heat loss of the circulating hot air when entering the first fry basket can be reduced, effectively improving the cooking efficiency and cooking effect. In addition, by arranging the first heating element at the top of the first cooking cavity, the top of the food in the first fry basket can also be heated by the first heating element, effectively improving the cooking efficiency and user experience.

The second hot air circulation system includes a second heating element, and the second heating element is adapted to be arranged in the second air guiding cavity and around the second flow guiding protrusion. By arranging the second heating element in the second air guiding cavity and around the second flow guiding protrusion, the circulating air flow to be entered into the second fry basket can be heated better and more uniformly, effectively improving the heating efficiency and heating effect. Moreover, the heat loss of the circulating hot air when entering the second fry basket can be reduced, effectively improving the cooking efficiency and cooking effect. In addition, by arranging the second heating element at the top of the second cooking cavity, the top of the food in the second fry basket can also be heated by the second heating element, effectively improving the cooking efficiency and user experience. In an optional embodiment, the first hot air circulation system includes a first thermal circulation fan, and the projections of the first thermal circulation fan and the first air inlet on the rotation axis of the first thermal circulation fan at least partially overlap. When the projections of the first thermal circulation fan and the first air inlet on the rotation axis of the first thermal circulation fan at least partially overlap, the first air inlet corresponds to at least part of the first thermal circulation fan. By setting the first air inlet to correspond to at least part of the first thermal circulation fan, the circulating air flow generated by the first thermal circulation fan can enter the first cooking cavity faster and better, thereby improving the thermal circulation efficiency in the first cooking cavity, and further enhancing the cooking efficiency.

The second hot air circulation system includes a second thermal circulation fan, and the projections of the second thermal circulation fan and the second air inlet on the rotation axis of the second thermal circulation fan at least partially overlap. When the projections of the second thermal circulation fan and the second air inlet on the rotation axis of the second thermal circulation fan at least partially overlap, the second air inlet corresponds to at least part of the second thermal circulation fan. By setting the second air inlet to correspond to at least part of the second thermal circulation fan, the circulating air flow generated by the second thermal circulation fan can enter the second cooking cavity faster and better, thereby improving the thermal circulation efficiency in the second cooking cavity, and further enhancing the cooking efficiency.

In an optional embodiment, a first recessed part recessed inward is provided at the lower part of the side wall of the first fry basket, the first ventilation hole is provided on the first recessed part, and a first hot air gap communicating with the first air return hole is formed between the first recessed part and the inner wall of the first cooking cavity. The first hot air gap is adapted to provide sufficient flow space for the circulating hot air. By providing the first hot air gap between the lower part of the first fry basket and the inner wall of the first cooking cavity, the circulating hot air flowing out of the first fry basket can quickly flow back to the first hot air cavity through the first hot air gap, thereby effectively improving the thermal circulation efficiency in the first cooking cavity, and further enhancing the cooking efficiency.

A second recessed part recessed inward is provided at the lower part of the side wall of the second fry basket, the second ventilation hole is provided on the second recessed part, and a second hot air gap communicating with the second air return hole is adapted to be formed between the second recessed part and the inner wall of the second cooking cavity. The second hot air gap is adapted to provide sufficient flow space for the circulating hot air. By providing the second hot air gap between the lower part of the second fry basket and the inner wall of the second cooking cavity, the circulating hot air flowing out of the second fry basket can quickly flow back to the second hot air cavity through the second hot air gap, thereby effectively improving the thermal circulation efficiency in the second cooking cavity, and further enhancing the cooking efficiency.

In an optional embodiment, a heat dissipation air duct communicating with the atmosphere is provided in the main body, a heat dissipation assembly is arranged in the heat dissipation air duct, a first air outlet channel is provided outside the first cooking cavity, one end of the first air outlet channel communicates with the first hot air cavity and the heat dissipation air duct, and the other end communicates with the atmosphere. The first air outlet channel is suitable for discharging excess circulating hot air in the first cooking cavity. By communicating the first air outlet channel with the heat dissipation air duct, the cold-hot mixed air outlet of the first cooking cavity can be achieved, which effectively reduces the temperature of the air discharged by the air fryer, avoids scalding the user, and thus improves the user's use safety and user experience.

A second air outlet channel is provided outside the second cooking cavity, one end of the second air outlet channel communicates with the second hot air cavity and the heat dissipation air duct, and the other end communicates with the atmosphere. The second air outlet channel is suitable for discharging excess circulating hot air in the second cooking cavity. By communicating the second air outlet channel with the heat dissipation air duct, the cold-hot mixed air outlet of the second cooking cavity can be achieved, which effectively reduces the temperature of the air discharged by the air fryer, avoids scalding the user, and thus improves the user's use safety and user experience.

On the other hand, the present application provides an air fryer with excellent cooking performance to solve the technical problems of existing air fryers, such as easy occurrence of cooking area differentiation, poor cooking effect, and poor user experience. The present application provides an air fryer with excellent cooking performance, comprising a main body, a cooking cavity arranged in the main body, and an inner concave cavity arranged outside the cooking cavity, a thermal circulation fan is arranged in the inner concave cavity, an air duct plate is provided at the top of the cooking cavity, the air duct plate is adapted to be recessed upward to form an air guiding cavity with a downward opening, an air inlet is provided on one side of the air guiding cavity, and the air inlet communicates with the inner concave cavity, a flow guiding protrusion protruding downward is provided in the middle of the air guiding cavity, a fry basket with an open top is arranged in the cooking cavity, the flow guiding protrusion is located directly above the open top of the fry basket, the width of the flow guiding protrusion is designed to gradually increase at least in part from the end close to the air inlet to the end far away from the air inlet. By providing the air guiding cavity with a downward opening at the top of the cooking cavity and arranging the flow guiding protrusion corresponding to the open top of the fry basket in the middle of the air guiding cavity, the circulating hot air generated by the thermal circulation fan can be split and then more uniformly introduced into the fry basket to heat the food in the fry basket, effectively improving the cooking effect. Meanwhile, by designing the flow guiding protrusion to gradually increase in width from the end close to the air inlet to the end far away from the air inlet, the flow guiding protrusion can better split the circulating hot air entering the air guiding cavity through the air inlet. This not only reduces the resistance encountered by the circulating hot air when being split, thereby improving the thermal circulation efficiency of the circulating hot air in the cooking cavity, and further enhancing the cooking efficiency, but also reduces the noise of the air fryer during operation, effectively improving the user experience.

In an optional embodiment, the end of the flow guiding protrusion close to the air inlet is adapted to be biased toward the rotation direction of the thermal circulation fan. Such an arrangement enables the flow guiding protrusion to better split the circulating hot air entering the air guiding cavity through the air inlet, reduces the problem of cooking area differentiation caused by uneven left-right splitting, and effectively improves the cooking effect.

In an optional embodiment, the side wall of the flow guiding protrusion is adapted to be an arc-shaped flow guiding structure extending obliquely inward from the end close to the air duct plate to the end far away from the air duct plate. By setting the side wall of the flow guiding protrusion as an arc-shaped flow guiding structure extending obliquely inward from the end close to the air duct plate to the end far away from the air duct plate, the flow guiding protrusion can better introduce the circulating hot air in the air guiding cavity into the fry basket, thereby improving the cooking efficiency of the air fryer. Moreover, it can avoid the regional accumulation of the circulating hot air when the flow guiding protrusion introduces the circulating hot air into the fry basket, effectively ensuring the cooking effect of the air fryer.

In an optional embodiment, an air guiding fin is provided in the air guiding cavity adjacent to the air inlet, the air guiding fin is adapted to extend arcuately toward the middle of the air guiding cavity, and the bending direction of the air guiding fin is opposite to the rotation direction of the thermal circulation fan. By arranging the air guiding fin in the air guiding cavity adjacent to the air inlet and setting the bending direction of the air guiding fin to be opposite to the rotation direction of the thermal circulation fan, not only can the circulating hot air entering the air guiding cavity through the air inlet be split, but also the split circulating hot air can be guided to both sides of the air guiding cavity to cooperate with the flow guiding protrusion to more uniformly introduce the circulating hot air into the fry basket, effectively improving the cooking effect of the food in the fry basket.

In an optional embodiment, the air guiding fin is adapted to be arranged on the side of the air guiding cavity biased toward the rotation direction of the thermal circulation fan. Such an arrangement can reduce the influence of the air pressure difference in the air flow generated by the thermal circulation fan on the splitting and guiding of the air guiding fin, making the distribution of the air flow split and introduced into the air guiding cavity by the air guiding fin more uniform. Thus, the distribution of the air flow guided into the fry basket by the air guiding cavity and the flow guiding protrusion is more uniform, which can effectively improve the cooking effect.

In an optional embodiment, a plurality of bendable bending parts are provided on the air guiding fin, a plurality of fixing holes for the bending parts to pass through are provided on the air duct plate, the bending parts are adapted to pass through the fixing holes from the bottom of the air duct plate and be bent to abut against the top of the air duct plate. The air fryer can fix the air guiding fin on the air duct plate by bending the bending parts through providing a plurality of bendable bending parts on the air guiding fin. Meanwhile, by providing a plurality of bendable bending parts on the air guiding fin, not only can the connection stability between the air guiding fin and the air duct plate be ensured, but also the installation, disassembly, and replacement of the air guiding fin are facilitated, which can effectively improve the use convenience of the air guiding fin.

In an optional embodiment, a notch is provided at the end of the air guiding fin close to the air inlet, the notch is adapted to be an arc-shaped inner concave structure extending obliquely inward from the end of the air guiding fin close to the air duct plate to the end far away from the air duct plate. By providing the notch at the end of the air guiding fin close to the air inlet, the circulating hot air entering the air guiding cavity through the air inlet can be better split. This not only reduces the resistance encountered by the circulating hot air when being split, thereby improving the thermal circulation efficiency of the circulating hot air in the cooking cavity, and further enhancing the cooking efficiency, but also reduces the noise of the air fryer during operation, effectively improving the user experience.

In an optional embodiment, the bottom wall of the air inlet is arc-shaped, and the projections of the thermal circulation fan and the air inlet on the rotation axis of the thermal circulation fan at least partially overlap. When the projections of the thermal circulation fan and the air inlet on the rotation axis of the thermal circulation fan overlap, the air inlet is directly opposite the outer side of the thermal circulation fan. Therefore, by setting the bottom wall of the air inlet to be arc-shaped and the projections of the thermal circulation fan and the air inlet on the rotation axis of the thermal circulation fan to overlap, the air inlet can better guide the circulating hot air generated by the thermal circulation fan, so as to improve the rate at which the circulating hot air enters the air guiding cavity and the cooking cavity through the air inlet, thereby improving the thermal circulation efficiency of the circulating hot air in the air guiding cavity and the cooking cavity, and further enhancing the cooking efficiency of the air fryer.

In an optional embodiment, the side wall of the air guiding cavity opposite to the air inlet protrudes toward the flow guiding protrusion to form a flow guiding part. By providing the flow guiding part protruding toward the flow guiding protrusion on the side of the air guiding cavity opposite to the air inlet, the air flow on both sides of the air guiding cavity can be guided toward the middle of the air guiding cavity and then downward into the fry basket through the flow guiding protrusion. This avoids the air flow on both sides of the air guiding cavity from colliding to form turbulent flow, which affects the thermal circulation speed in the cooking cavity, and effectively improves the cooking efficiency of the air fryer.

In an optional embodiment, a heating assembly is provided in the air guiding cavity, the heating assembly includes a heating element, and the heating element is adapted to be arranged around the flow guiding protrusion. By arranging the heating element in the air guiding cavity and around the flow guiding protrusion, the air flow entering the flow guiding cavity can be well heated, avoiding the problem of cooking area differentiation caused by regional temperature differences, and effectively ensuring the cooking effect of the air fryer. On the other hand, the present application provides a safe-to-use air fryer to solve the technical problems of existing air fryers, such as low cooking efficiency, poor user use safety, and poor user experience. The present application provides a safe-to-use air fryer, comprising a main body, a cooking cavity is arranged in the main body, a inner concave cavity and a heat dissipation air cavity are sequentially provided at the rear side of the cooking cavity, the inner concave cavity communicates with the cooking cavity, a thermal circulation fan is arranged in the inner concave cavity, a hot air outlet is provided on the side wall of the inner concave cavity opposite to the thermal circulation fan, an air outlet is provided on the side wall of the main body corresponding to the hot air outlet, an air outlet channel communicating with the hot air outlet and the air outlet is provided in the main body, a heat dissipation fan is arranged in the heat dissipation air cavity, the heat dissipation air cavity is provided with a cold air outlet communicating with the air outlet channel. The air fryer can discharge excess circulating hot air in the cooking cavity by providing the air outlet channel at the rear side of the cooking cavity. Meanwhile, by communicating the heat dissipation air cavity with the air outlet channel, the heat dissipation cold air generated by the heat dissipation fan in the heat dissipation air cavity can be used to dissipate heat of the circulating hot air in the air outlet channel, thereby reducing the temperature of the air discharged from the air outlet. This not only can avoid overheating of the external wall and/or objects of the main body, but also can reduce the risk of the user being scalded, effectively improving the user's use safety and user experience.

In an optional embodiment, the cooking cavity includes a first cooking cavity and a second cooking cavity arranged at intervals up and down, a first inner concave cavity and a first heat dissipation air cavity are sequentially provided at the rear side of the first cooking cavity, the first inner concave cavity communicates with the first cooking cavity, a first thermal circulation fan is arranged in the first inner concave cavity, a first hot air outlet is provided on the side wall of the first inner concave cavity opposite to the first thermal circulation fan, a first air outlet is provided on the side wall of the main body corresponding to the first hot air outlet, a first air outlet channel communicating with the first hot air outlet and the first air outlet is provided in the main body, a first heat dissipation fan is arranged in the first heat dissipation air cavity, the first heat dissipation air cavity is provided with a first cold air outlet communicating with the first air outlet channel; a second inner concave cavity and a second heat dissipation air cavity are sequentially provided at the rear side of the second cooking cavity, the second inner concave cavity communicates with the second cooking cavity, a second thermal circulation fan is arranged in the second inner concave cavity, a second hot air outlet is provided on the side wall of the second inner concave cavity opposite to the second thermal circulation fan, a second air outlet is provided on the side wall of the main body corresponding to the second hot air outlet, a second air outlet channel communicating with the second hot air outlet and the second air outlet is provided in the main body, a second heat dissipation fan is arranged in the second heat dissipation air cavity, the second heat dissipation air cavity is provided with a second cold air outlet communicating with the second air outlet channel. By arranging two cooking cavities arranged at intervals up and down in the main body, the air fryer can not only cook multiple types of food simultaneously to meet the user's diverse cooking needs and effectively improve the cooking efficiency, but also reduce the kitchen space occupancy of the air fryer, thereby improving the space utilization rate of the kitchen and further enhancing the user experience. Meanwhile, by respectively arranging two heat dissipation air cavities at the rear sides of the two cooking cavities, the air fryer can use the heat dissipation cold air in the two heat dissipation air cavities to dissipate heat of the two cooking cavities respectively, thereby effectively reducing the temperature of the main body. In addition, by respectively arranging two air outlet channels at the rear sides of the two cooking cavities and communicating the two air outlet channels with the two heat dissipation air cavities respectively, the air fryer can not only realize the separate discharge of the circulating hot air in the two cooking cavities, effectively improving the discharge efficiency of the circulating hot air in the two cooking cavities, but also use the heat dissipation cold air in the two heat dissipation air cavities to dissipate heat of the circulating hot air in the two air outlet channels respectively, thereby reducing the temperature of the air discharged from the two air outlet channels, and further reducing the risk of the user being scalded, effectively improving the user's use safety.

In an optional embodiment, a first enclosure forming at least part of the first heat dissipation air cavity is provided outside the first heat dissipation fan, and the first cold air outlet is provided on the first enclosure; a second enclosure forming at least part of the second heat dissipation air cavity is provided outside the second heat dissipation fan, and the second cold air outlet is provided on the second enclosure. The first enclosure and the second enclosure are adapted to play a guiding role, by respectively arranging the first enclosure and the second enclosure outside the first heat dissipation fan and the second heat dissipation fan, the heat dissipation cold air generated by the first heat dissipation fan and the second heat dissipation fan can be collected and then intensively guided out from the first cold air outlet and the second cold air outlet respectively to dissipate heat of the circulating hot air in the first air outlet channel and the second air outlet channel. This not only can effectively improve the heat dissipation efficiency and heat dissipation effect of the first heat dissipation fan and the second heat dissipation fan, but also can effectively reduce the temperature of the air discharged from the first air outlet channel and the second air outlet channel, thereby avoiding scalding the user and effectively improving the user's use safety.

In an optional embodiment, the projections of the first cold air outlet and the first heat dissipation fan on the rotation axis of the first heat dissipation fan at least partially overlap; the projections of the second cold air outlet and the second heat dissipation fan on the rotation axis of the second heat dissipation fan at least partially overlap. Such an arrangement enables the heat dissipation cold air generated by the first heat dissipation fan and the second heat dissipation fan to enter the first air outlet channel and the second air outlet channel better and faster through the first cold air outlet and the second cold air outlet, thereby dissipating heat of the circulating hot air in the first air outlet channel and the second air outlet channel, and effectively improving the heat dissipation efficiency and heat dissipation effect.

In an optional embodiment, a first installation cavity communicating with the first heat dissipation air cavity is provided at the rear side of the first heat dissipation air cavity, a first drive system is arranged in the first installation cavity, and the first drive system is adapted to extend to be drivingly connected with the first thermal circulation fan and the first heat dissipation fan; a second installation cavity communicating with the second heat dissipation air cavity is provided at the rear side of the second heat dissipation air cavity, a second drive system is arranged in the second installation cavity, and the second drive system is adapted to extend to be drivingly connected with the second thermal circulation fan and the second heat dissipation fan. By driving the first thermal circulation fan and the first heat dissipation fan with the same drive system, and driving the second thermal circulation fan and the second heat dissipation fan with the same drive system, not only can the overall structure of the air fryer be simplified, but also the overall volume of the air fryer can be reduced, thereby reducing the space occupancy of the air fryer and effectively improving the user experience. Meanwhile, by driving the first thermal circulation fan, the first heat dissipation fan, the second thermal circulation fan, and the second heat dissipation fan with different drive systems, not only can the simultaneous cooking of the two cooking cavities be realized, but also the separate cooking of any one of the two cooking cavities can be realized, thereby meeting the user's diverse cooking needs and effectively improving the user experience.

In an optional embodiment, a first cold air inlet and a second cold air inlet communicating with the first installation cavity and the second installation cavity respectively are arranged at intervals up and down at the rear side of the main body, the first cold air inlet and the second cold air inlet are adapted to correspond to at least part of the first drive system and the second drive system. By arranging the first cold air inlet and the second cold air inlet communicating with the first installation cavity and the second installation cavity respectively on the main body, and setting the first cold air inlet and the second cold air inlet to correspond to the first drive system and the second drive system respectively, not only can the external cold air be sucked into the first installation cavity and the second installation cavity by the first heat dissipation fan and the second heat dissipation fan to dissipate heat of the control system, drive system, and other electrical components in the first installation cavity and the second installation cavity, but also the external cold air can contact the first drive system and the second drive system faster after entering the first installation cavity and the second installation cavity through the first cold air inlet and the second cold air inlet, thereby dissipating heat of the first drive system and the second drive system, and effectively improving the heat dissipation efficiency and heat dissipation effect.

In an optional embodiment, a protruding part protruding outward for covering the first drive system and the second drive system is provided at the rear side of the main body, the first cold air inlet and the second cold air inlet are provided on the protruding part and located at the rear side of the protruding part, vertically extending arc-shaped transition surfaces are provided on both sides of the rear side wall of the main body adjacent to the protruding part, the first air outlet and the second air outlet are arranged at intervals up and down on the transition surfaces. By providing the protruding part at the rear side of the main body and arranging the first cold air inlet and the second cold air inlet at the rear side of the protruding part, the air fryer can not only hide the first cold air inlet and the second cold air inlet to improve the overall appearance of the main body, but also increase the gap between the first drive system, the second drive system, and the outer shell of the main body. This facilitates the external cold air to better and more comprehensively dissipate heat of the first drive system and the second drive system after entering the first installation cavity and the second installation cavity through the first cold air inlet and the second cold air inlet, effectively improving the heat dissipation efficiency and heat dissipation effect. Meanwhile, by arranging the first air outlet and the second air outlet at the rear side part of the main body and adjacent to the protruding part, the air fryer can not only hide the first air outlet and the second air outlet to improve the overall appearance of the main body, but also use the first heat dissipation fan and the second heat dissipation fan to drive the flow of the cold air outside the main body, thereby mixing with the circulating hot air discharged from the first air outlet and the second air outlet to reduce the temperature of the air discharged from the first air outlet and the second air outlet, avoiding scalding the user, and effectively improving the user's use safety.

In an optional embodiment, an air outlet assembly made of high-temperature resistant material is provided in the main body, the air outlet assembly includes a first air outlet assembly and a second air outlet assembly, the first air outlet channel is provided in the first air outlet assembly, and the second air outlet channel is provided in the second air outlet assembly. By arranging the first air outlet assembly and the second air outlet assembly made of high-temperature resistant material in the main body, not only can the independent air outlet of the first cooking cavity and the second cooking cavity be realized, effectively improving the air outlet efficiency, but also the influence of the circulating hot air on the first air outlet assembly and the second air outlet assembly can be reduced, effectively improving the air outlet stability of the first air outlet assembly and the second air outlet assembly as well as the performance stability of the air fryer.

In an optional embodiment, the first air outlet assembly and the second air outlet assembly are adapted to be an integrally formed structure. By setting the first air outlet assembly and the second air outlet assembly as an integrally formed structure, not only can the overall structure of the air fryer be simplified, but also the structural integrity of the air fryer can be improved, thereby enhancing the performance stability and reliability of the air fryer and effectively improving the user experience.

In an optional embodiment, a heat dissipation air duct communicating with the heat dissipation air cavity is provided in the main body, the heat dissipation air duct is adapted to be arranged around at least part of the cooking cavity, a first ventilation opening and a second ventilation opening communicating with the atmosphere are respectively provided at both ends of the heat dissipation air duct, the first ventilation opening is arranged around the peripheral edge of the top of the main body, and the second ventilation opening is provided at the bottom of the main body. By providing the heat dissipation air duct in the main body and arranging the heat dissipation air duct around at least part of the cooking cavity, the heat dissipation cold air in the heat dissipation air duct can be used to dissipate heat of the cooking cavity. This not only can reduce the outward transfer of high temperature in the cooking cavity, which affects the normal operation of electrical components outside the cooking cavity, but also can avoid the overheating of the main body, which scalds the user, and effectively improves the user's use safety. Meanwhile, by arranging the second ventilation opening at the bottom of the main body and the first ventilation opening around the peripheral edge of the top of the main body, not only can the second ventilation opening be hidden to improve the overall appearance of the air fryer, but also more external cold air can enter the heat dissipation air duct through the first ventilation opening to dissipate heat of the main body, effectively improving the heat dissipation efficiency of the air fryer.

To make the objectives, technical solutions, and advantages of the embodiments of the present disclosure clearer, the technical solutions in the embodiments of the present disclosure will be clearly and completely described below with reference to the accompanying drawings in the embodiments of the present disclosure. Obviously, the described embodiments are some embodiments of the present disclosure, but not all embodiments. The components of the embodiments of the present disclosure generally described and illustrated in the accompanying drawings herein can be arranged and designed in various different configurations.

Therefore, the following detailed description of the embodiments of the present disclosure provided in the accompanying drawings is not intended to limit the scope of the claimed present disclosure, but merely represents selected embodiments of the present disclosure. Based on the embodiments in the present disclosure, all other embodiments obtained by those of ordinary skill in the art without creative work shall fall within the protection scope of the present disclosure.

### Embodiment 1:

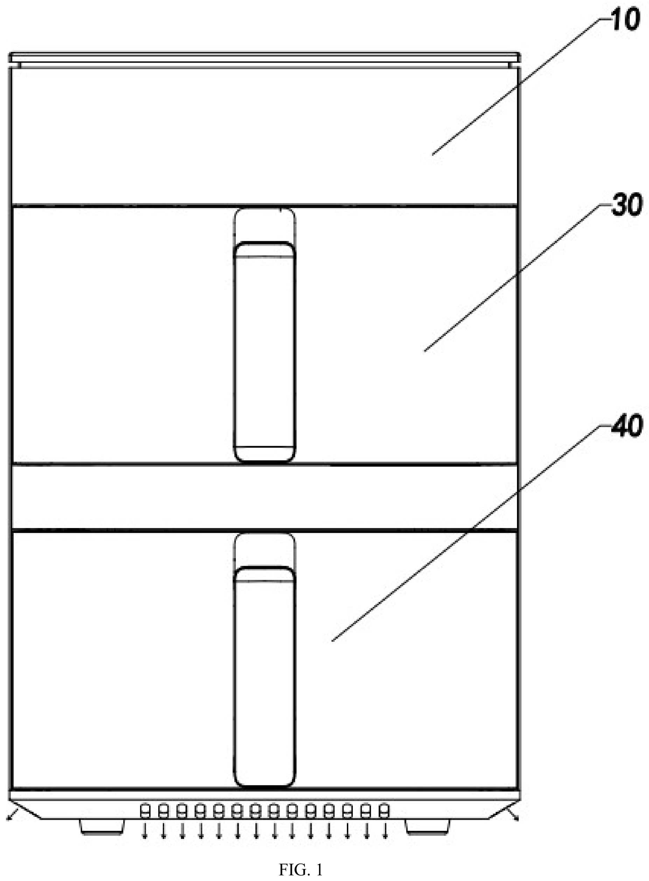

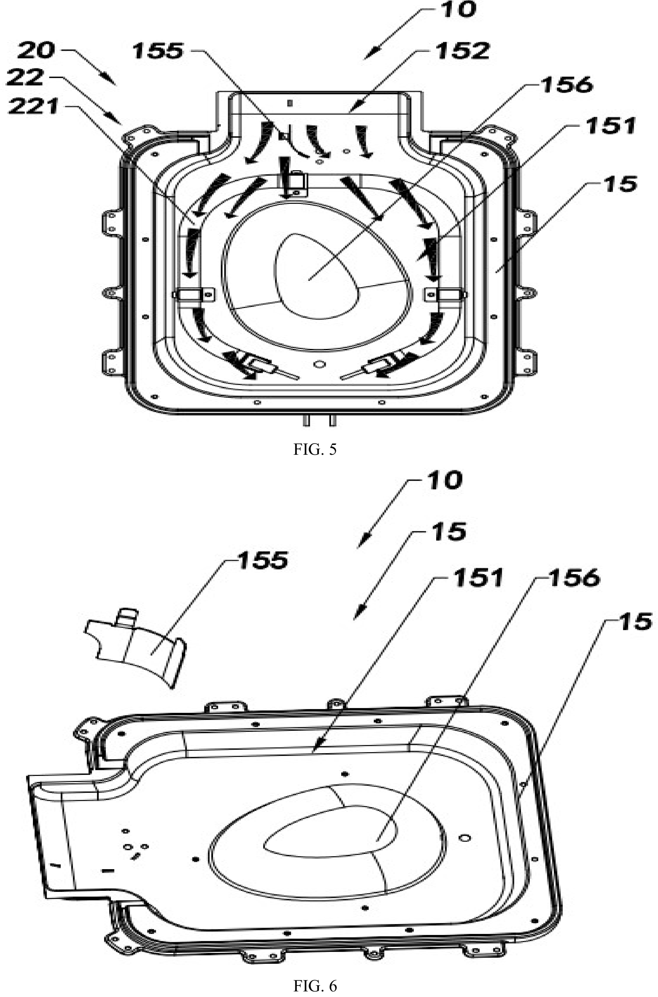

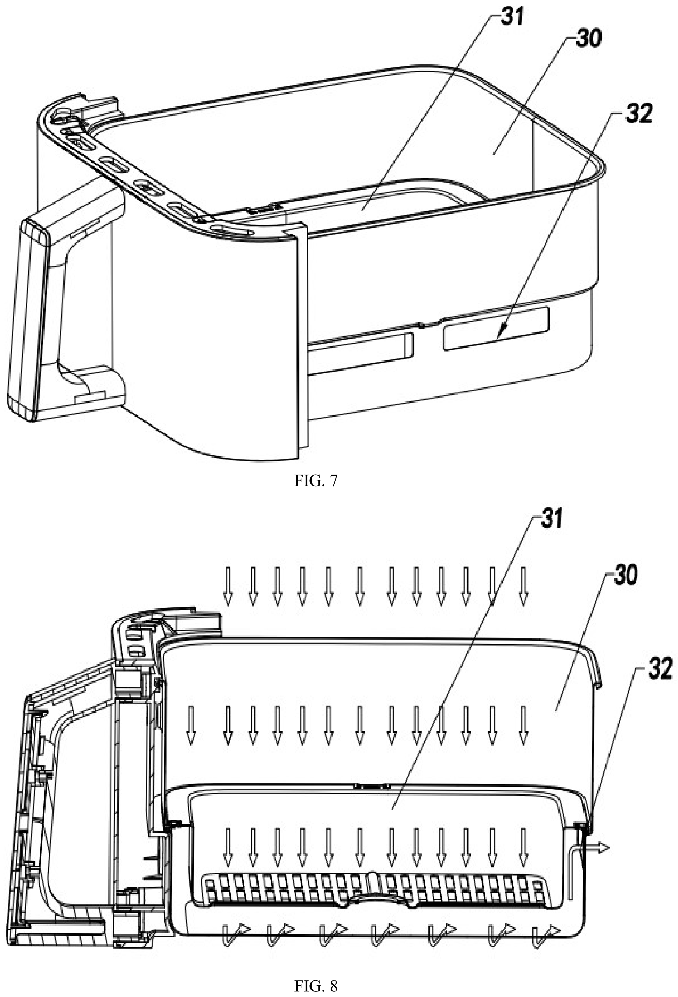

As shown in FIG. 1 to 10, which are schematic diagrams of a first embodiment of air fryer provided by the present application. The air fryer includes a main body 10, a cooking cavity 11 with an open front side arranged in the main body 10, and a hot air circulation system 20 communicating with the cooking cavity 11, the hot air circulation system 20 includes a thermal circulation fan 21 and a heating assembly 22, the thermal circulation fan 21 is adapted to generate circulating air flow, and the heating assembly 22 is adapted to heat the circulating air flow generated by the thermal circulation fan 21 to form circulating hot air. By introducing the circulating hot air into the cooking cavity 11, the food in the cooking cavity 11 can be heated.

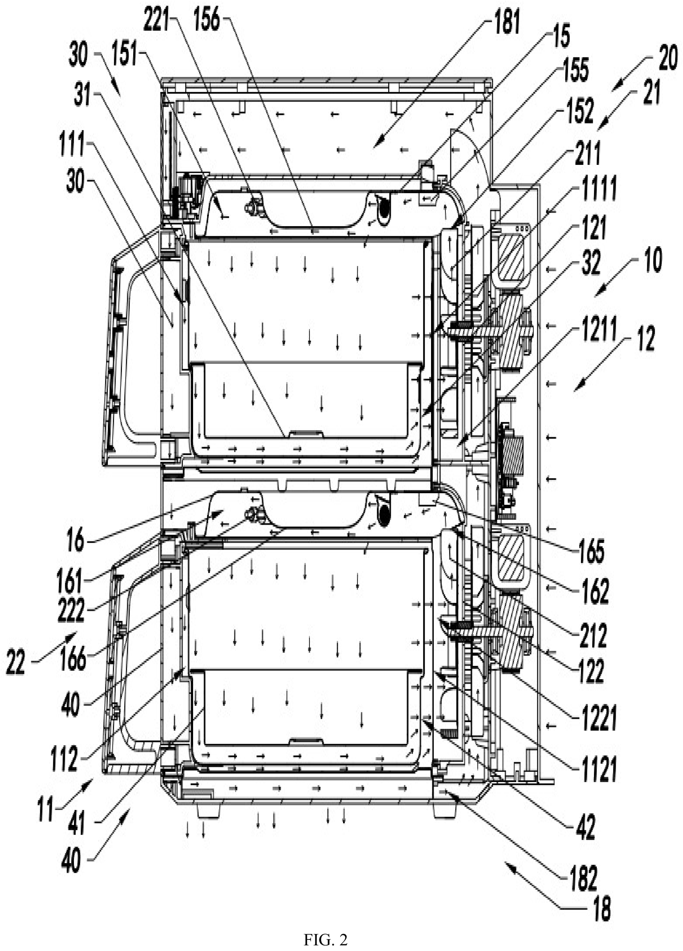

Specifically, as shown in FIG. 1 and 2, the cooking cavity 11 includes a first cooking cavity 111 and a second cooking cavity 112 arranged at intervals up and down, a first air guide cover 121 is provided at the rear side of the first cooking cavity 111, a first inner concave cavity 1211 is provided on the side of the first air guide cover 121 facing the first cooking cavity 111, a first thermal circulation fan 211 capable of generating circulating air flow is arranged in the first inner concave cavity 1211, a first heating element 221 is provided on the air flow circulation path of the first thermal circulation fan 211, the first heating element 221 is adapted to heat the circulating air flow generated by the first thermal circulation fan 211 to form circulating hot air, the upper part of the first inner concave cavity 1211 is adapted to extend upward to the upper part of the first cooking cavity 111 and communicate with the upper part of the first cooking cavity 111, a first ventilation opening 1111 corresponding to the first thermal circulation fan 211 is provided on the rear side wall of the first cooking cavity 111, the circulating hot air generated by the first thermal circulation fan 211 and the first heating element 221 is adapted to be introduced upward into the first cooking cavity 111 and then flow back to the first inner concave cavity 1211 through the first ventilation opening 1111; a second air guide cover 122 is provided at the rear side of the second cooking cavity 112, a second inner concave cavity 1221 is provided on the side of the second air guide cover 122 facing the first cooking cavity 12, a second thermal circulation fan 212 capable of generating circulating air flow is arranged in the second inner concave cavity 1221, a second heating element 222 is provided on the air flow circulation path of the second thermal circulation fan 212, the second heating element 222 is adapted to heat the circulating air flow generated by the first thermal circulation fan 211 to form circulating hot air, the upper part of the second inner concave cavity 1221 is adapted to extend upward to the upper part of the second cooking cavity 112 and communicate with the upper part of the second cooking cavity 112, a second ventilation opening 1121 corresponding to the second thermal circulation fan 212 is provided on the rear side wall of the second cooking cavity 112, the circulating hot air generated by the second thermal circulation fan 212 and the second heating element 222 is adapted to be introduced upward into the second cooking cavity 112 and then flow back to the second inner concave cavity 1221 through the second ventilation opening 1121. By arranging the first cooking cavity 111 and the second cooking cavity 112 in the main body 10 at intervals up and down, the air fryer can not only cook two types of food simultaneously to improve food cooking efficiency, but also reduce the lateral volume of the air fryer, lower the space occupancy of the air fryer, and improve the space utilization rate. Meanwhile, by separately arranging the first thermal circulation fan 211, the first air guide cover 121, the second thermal circulation fan 212, and the second air guide cover 122 outside the first cooking cavity 111 and the second cooking cavity 112, the circulating hot air generated by the first thermal circulation fan 211 and the second thermal circulation fan 212 can be better introduced into the first cooking cavity 111 and the second cooking cavity 112 to heat the food in the first cooking cavity 111 and the second cooking cavity 112. Moreover, the air intake and air outlet of the first cooking cavity 111 and the second cooking cavity 112 do not interfere with each other, which effectively improves the thermal circulation efficiency in the first cooking cavity 111 and the second cooking cavity 112, thereby enhancing the cooking efficiency and effectively improving the user experience.

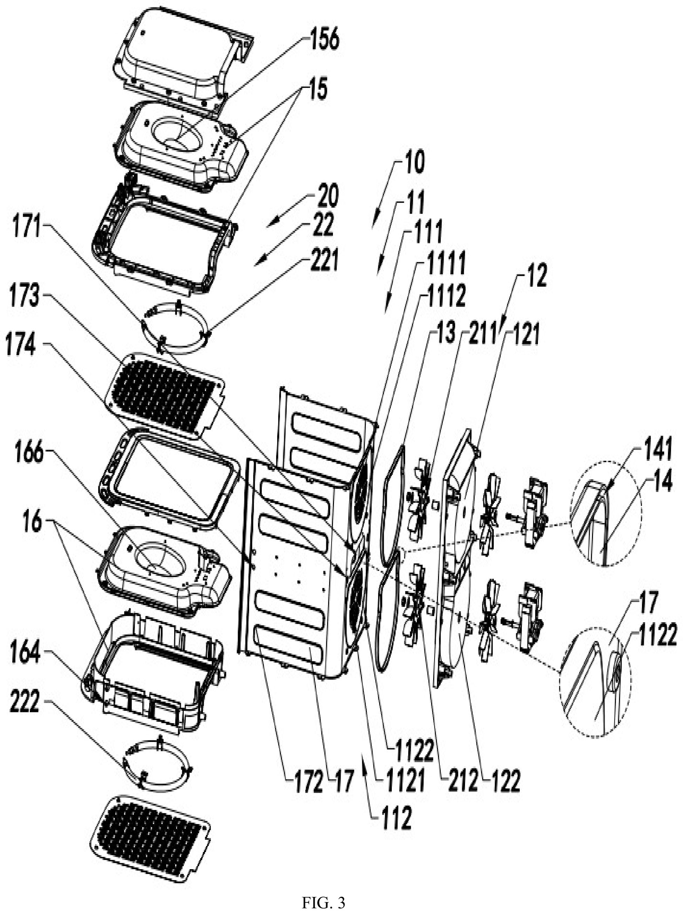

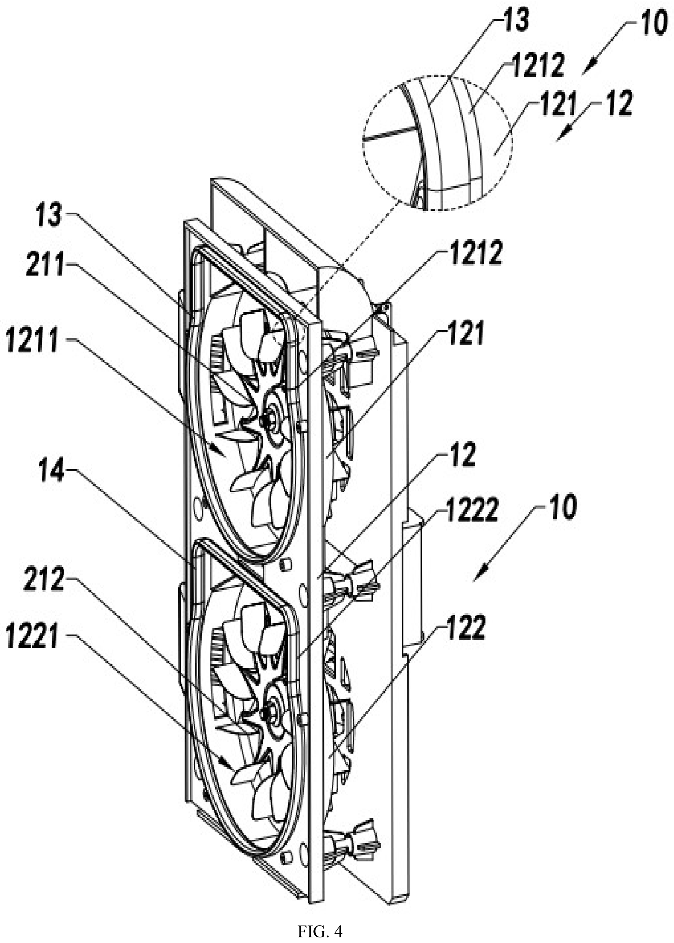

As shown in FIG. 3 and 4, a first sealing member 13 surrounding the first inner concave cavity 1211 is provided on the first air guide cover 121, the first air guide cover 121 is adapted to be in sealing fit with the rear side wall of the first cooking cavity 111 through the first sealing member 13; a second sealing member 14 surrounding the second inner concave cavity 1221 is provided on the second air guide cover 122, the second air guide cover 122 is adapted to be in sealing fit with the rear side wall of the second cooking cavity 112 through the second sealing member 14. By arranging the first sealing member 13 between the first air guide cover 121 and the rear side wall of the first cooking cavity 111, and the second sealing member 14 between the second air guide cover 122 and the rear side wall of the second cooking cavity 112, the sealing fit between the first air guide cover 121 and the rear side wall of the first cooking cavity 111 as well as between the second air guide cover 122 and the rear side wall of the second cooking cavity 112 can be achieved. This effectively prevents the circulating hot air in the first inner concave cavity 1211 and the second inner concave cavity 1221 from leaking out of the first inner concave cavity 1211 and the second inner concave cavity 1221, thereby avoiding affecting the normal operation of electrical components outside the first inner concave cavity 1211 and the second inner concave cavity 1221, ensuring the normal operation of the electrical components outside the first inner concave cavity 1211 and the second inner concave cavity 1221, and improving the performance stability and use safety of the air fryer. As shown in FIG. 2 and 3, in an optional embodiment, a first fry basket 30 with an open top is arranged in the first cooking cavity 111, a first air duct plate 15 is provided at the top of the first cooking cavity 111, a first air guiding cavity 151 with a downward opening is formed in the first air duct plate 15, the opening of the first air guiding cavity 151 is at least partially corresponding to the open top of the first fry basket 30, the rear side of the first air duct plate 15 is adapted to extend into the first inner concave cavity 1211, a first air inlet 152 is provided at the rear side of the first air guiding cavity 151, the first air guiding cavity 151 is adapted to communicate with the first inner concave cavity 1211 through the first air inlet 152; a second fry basket 40 with an open top is arranged in the second cooking cavity 112, a second air duct plate 16 is provided at the top of the second cooking cavity 112, a second air guiding cavity 161 with a downward opening is formed in the second air duct plate 16, the opening of the second air guiding cavity 161 is at least partially corresponding to the open top of the second fry basket 40, the rear side of the second air duct plate 16 is adapted to extend into the second inner concave cavity 1221, a second air inlet 162 is provided at the rear side of the second air guiding cavity 161, the second air guiding cavity 161 is adapted to communicate with the second inner concave cavity 1221 through the second air inlet 152. When the air fryer is in operation, the circulating hot air generated by the first thermal circulation fan 211 and the second thermal circulation fan 212 is adapted to enter the first air guiding cavity 151 and the second air guiding cavity 161 through the first air inlet 152 and the second air inlet 162 respectively, and then be guided downward into the first fry basket 30 and the second fry basket 40 by the first air guiding cavity 151 and the second air guiding cavity 161 to cook the food in the first fry basket 30 and the second fry basket 40. Such an arrangement not only prevents the circulating hot air generated by the first thermal circulation fan 211 and the second thermal circulation fan 212 from directly blowing into the first cooking cavity 111 and the second cooking cavity 112, which may cause the food in the first cooking cavity 111 and the second cooking cavity 112 to burn, but also effectively ensures the cooking effect of the food in the first cooking cavity 111 and the second cooking cavity 112. In addition, the extending parts of the first air duct plate 15 and the second air duct plate 16 can better introduce the circulating hot air generated by the first thermal circulation fan 211 and the second thermal circulation fan 212 into the first air guiding cavity 151 and the second air guiding cavity 161, effectively improving the thermal circulation efficiency of the circulating hot air in the first cooking cavity 111 and the second cooking cavity 112, thereby enhancing the cooking efficiency of the air fryer.

As shown in FIG. 2, 7, 8, and 9, in an optional embodiment, a first frying plate 31 with through holes is suspended in the first fry basket 30, a first hot air hole 32 communicating with the inner cavity of the first fry basket 30 and the first cooking cavity 111 is provided on the side wall of the first fry basket 30, the first hot air hole 32 is located below the first frying plate 31 and corresponds to at least part of the first ventilation hole 1111, the circulating hot air generated by the first thermal circulation fan 211 is adapted to enter the first fry basket 30 through the first air guiding cavity 151, pass through the first frying plate 31, and flow back to the first inner concave cavity 1211 from the first hot air hole 32 and the first ventilation hole 1111. Such an arrangement not only can prop up the food through the first frying plate 31 to facilitate the circulating hot air to better heat the upper and lower surfaces of the food in the first fry basket 30, avoiding the problem of cooking area differentiation, but also can realize the lateral air outlet of the first fry basket 30, so that the circulating hot air can heat the food in the first fry basket 30 more uniformly, effectively improving the cooking effect of the food in the first fry basket 30.

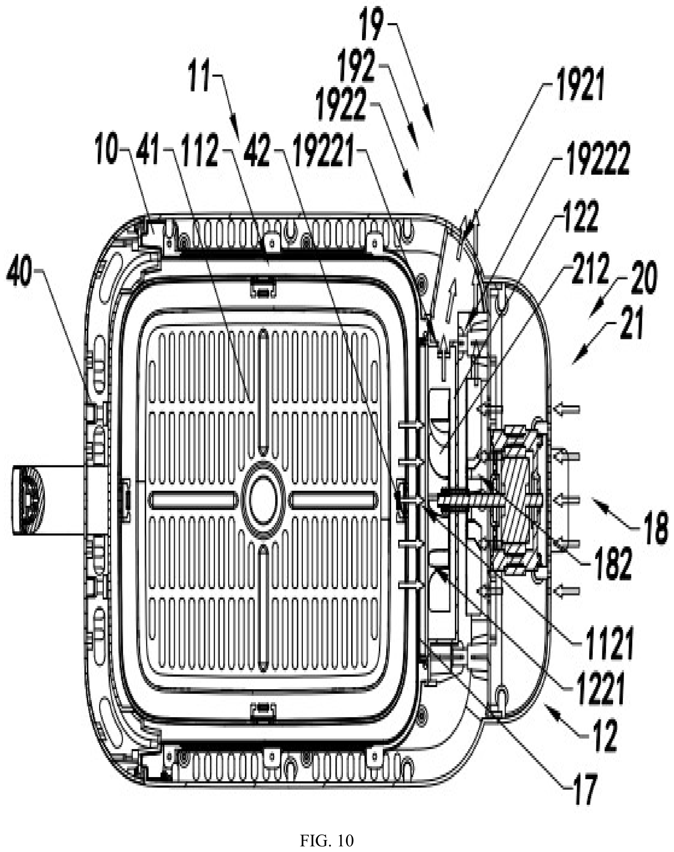

Similarly, as shown in FIG. 2 and 10, in an optional embodiment, a second frying plate 41 with through holes is also suspended in the second fry basket 40, a second hot air hole 42 communicating with the inner cavity of the second fry basket 40 and the second cooking cavity 112 is provided on the side wall of the second fry basket 40, the second hot air hole 42 is located below the second frying plate 41 and corresponds to at least part of the second ventilation hole 1121, the circulating hot air generated by the second thermal circulation fan 212 is adapted to enter the second fry basket 40 through the second air guiding cavity 161, pass through the second frying plate 41, and flow back to the second inner concave cavity 1221 from the second hot air hole 42 and the second ventilation hole 1121. This not only can prop up the food through the second frying plate 41 to facilitate the circulating hot air to better heat the upper and lower surfaces of the food in the second fry basket 40, avoiding the problem of cooking area differentiation, but also can realize the lateral air outlet of the second fry basket 40, so that the circulating hot air can heat the food in the second fry basket 40 more uniformly, effectively improving the cooking effect of the food in the second fry basket 40.

As shown in FIG. 3 and 4, in an optional embodiment, an integral rear side wall 17 is provided at the rear sides of the first cooking cavity 111 and the second cooking cavity 112, the integral rear side wall 17 is adapted to be an integrally formed integral rear side wall structure composed of the rear side wall of the first cooking cavity 111 and the rear side wall of the second cooking cavity 112, a second air duct plate installation opening 171 is provided at the position of the integral rear side wall 17 corresponding to the rear side of the second air duct plate 16, and the rear side of the second air duct plate 16 passes through the second air duct plate installation opening 171 and extends into the second inner concave cavity 1221. By arranging the rear side walls of the first cooking cavity 111 and the second cooking cavity 112 as an integral rear side wall structure, not only can the overall structure of the air fryer be simplified, but also the installation difficulty of the integral rear side wall 17 can be reduced, thereby lowering the production cost and user use cost of the air fryer. Meanwhile, by providing the second air duct plate installation opening 171 on the integral rear side wall 17, not only can the structural rationality of the air fryer be ensured, but also the positioning of the installation of the second air duct plate 16 can be realized to reduce the installation difficulty of the second air duct plate 16. In addition, the second air duct plate installation opening 171 is also adapted to limit the installation of the second air duct plate 16 to reduce the shaking of the second air duct plate 16 during installation, effectively ensuring the connection stability between the second air duct plate 16 and the integral rear side wall 17 as well as the structural stability of the air fryer.

As shown in FIG. 3, in an optional embodiment, a protruding positioning column 163 is provided at the rear side of the second air duct plate 16, and a positioning hole 172 matching the positioning column 163 is provided on the integral rear side wall 17. The positioning column 163 and the positioning hole 172 are adapted to position the installation of the second air duct plate 16. By positioning the installation of the second air duct plate 16 through the positioning column 163 and the positioning hole 172, the installation difficulty of the second air duct plate can be effectively reduced. Meanwhile, the positioning column 163 and the positioning hole 172 are also adapted to limit the installation of the second air duct plate 16. By limiting the installation of the second air duct plate 16 through the positioning column 163 and the positioning hole 172, the connection strength and connection stability between the second air duct plate 16 and the integral rear side wall 17 can be improved, effectively ensuring the performance stability of the air fryer.

As shown in FIG. 3, in an optional embodiment, a plurality of mounting holes 164 are provided on both sides of the second air duct plate 16, enclosures 173 extending toward the front side are provided on both sides of the integral rear side wall 17, a plurality of fixing holes 174 matching the mounting holes 164 are provided on the enclosures 173, fasteners are limited in the mounting holes 164 and the fixing holes 174. By providing a plurality of the mounting holes 164 on both sides of the second air duct plate 16 to install the second air duct plate 16, the connection strength and connection stability between the second air duct plate 16 and the enclosures 173 can be improved, effectively ensuring the structural stability and performance stability of the air fryer.

As shown in FIG. 3 and 4, in an optional embodiment, an air guide cover plate 12 is provided at the rear side of the integral rear side wall 17, the air guide cover plate 12 is adapted to be integrally formed by the first air guide cover 121 and the second air guide cover 122, the air guide cover plate 12 is stamped at intervals up and down to form the first inner concave cavity 1211 and the second inner concave cavity 1221, the integral rear side wall 17 is fixedly connected with the air guide cover plate 12 through fasteners. Such an arrangement not only simplifies the structures of the first air guide cover 121 and the second air guide cover 122, reduces the installation difficulty of the first air guide cover 121 and the second air guide cover 122, thereby lowering the production cost and user use cost of the air fryer, but also improves the connection strength and connection stability between the integral rear side wall 17 and the air guide cover plate 12, effectively ensuring the performance stability of the air fryer.

As shown in FIG. 2, in an optional embodiment, the projections of the first thermal circulation fan 211 and the first air inlet 152 on the rotation axis of the first thermal circulation fan 211 at least partially overlap, when the projections of the first thermal circulation fan 211 and the first air inlet 152 on the rotation axis of the first thermal circulation fan 211 overlap, the first air inlet 152 is directly opposite the outer side of the first thermal circulation fan 211. Such an arrangement enables the circulating hot air generated by the first thermal circulation fan 211 to enter the first air inlet 152 better and faster, so as to improve the thermal circulation efficiency in the first cooking cavity 111, thereby enhancing the cooking efficiency. The projections of the second thermal circulation fan 212 and the second air inlet 162 on the rotation axis of the second thermal circulation fan 212 at least partially overlap, when the projections of the second thermal circulation fan 212 and the second air inlet 162 on the rotation axis of the second thermal circulation fan 212 overlap, the second air inlet 162 is directly opposite the outer side of the second thermal circulation fan 212. Such an arrangement enables the circulating hot air generated by the second thermal circulation fan 212 to enter the second air inlet 162 better and faster, so as to improve the thermal circulation efficiency in the second cooking cavity 112, thereby enhancing the cooking efficiency.

As shown in FIG. 2, 5, and 6, in an optional embodiment, a first air guiding fin 155 is provided in the first air guiding cavity 151 adjacent to the first air inlet 152, the first air guiding fin 155 extends arcuately toward the middle of the first air guiding cavity 151, and the bending direction of the first air guiding fin 155 is opposite to the rotation direction of the first thermal circulation fan 211, a second air guiding fin 165 is provided in the second air guiding cavity 161 adjacent to the second air inlet 162. The second air guiding fin 165 extends arcuately toward the middle of the second air guiding cavity 161, and the bending direction of the second air guiding fin 165 is opposite to the rotation direction of the second thermal circulation fan 212. By respectively arranging the first air guiding fin 155 and the second air guiding fin 165 in the first air guiding cavity 151 and the second air guiding cavity 161 adjacent to the first air inlet 152 and the second air inlet 162, and setting the bending directions of the first air guiding fin 155 and the second air guiding fin 165 to be opposite to the rotation directions of the first thermal circulation fan 211 and the second thermal circulation fan 212 respectively, not only can the circulating hot air entering the first air guiding cavity 151 and the second air guiding cavity 161 through the first air inlet 152 and the second air inlet 162 be split, but also the split circulating hot air can be guided to both sides of the first air guiding cavity 151 and the second air guiding cavity 161 respectively. Thus, the circulating hot air can be more uniformly guided downward into the first cooking cavity 111 and the second cooking cavity 112 through the first air guiding cavity 151 and the second air guiding cavity 161 to cook the food in the first cooking cavity 111 and the second cooking cavity 112, which can effectively improve the cooking effect of the air fryer.

As shown in FIG. 2, 3, 5, and 6, in an optional embodiment, a first flow guiding protrusion 156 protruding downward is provided in the middle of the first air guiding cavity 151, the width of the first flow guiding protrusion 156 is designed to gradually increase at least in part from the end close to the rear side to the end close to the front side, a second flow guiding protrusion 166 protruding downward is provided in the middle of the second air guiding cavity 161, the width of the second flow guiding protrusion 166 is designed to gradually increase at least in part from the end close to the rear side to the end close to the front side. By designing the first flow guiding protrusion 156 and the second flow guiding protrusion 166 to gradually increase in width from the end close to the rear side to the end close to the front side, the first flow guiding protrusion 156 and the second flow guiding protrusion 166 can better split the circulating hot air entering the first air guiding cavity 151 and the second air guiding cavity 161. This not only reduces the resistance encountered by the circulating hot air when being split, thereby improving the thermal circulation efficiency of the circulating hot air in the first cooking cavity 111 and the second cooking cavity 112, and further enhancing the cooking efficiency, but also reduces the noise of the air fryer during operation, effectively improving the user experience.

As shown in FIG. 3, 5, and 6, in an optional embodiment, the first flow guiding protrusion 156 is inclined in the front-rear extension direction, and the rear side of the first flow guiding protrusion 156 is inclined toward the rotation direction of the first thermal circulation fan 211; the second flow guiding protrusion 166 is inclined in the front-rear extension direction, and the rear side of the second flow guiding protrusion 166 is inclined toward the rotation direction of the second thermal circulation fan 212. By arranging the rear sides of the first flow guiding protrusion 156 and the second flow guiding protrusion 166 to be inclined toward the rotation directions of the first thermal circulation fan 211 and the second thermal circulation fan 212 respectively, the first flow guiding protrusion 156 and the second flow guiding protrusion 166 can better split the circulating hot air entering the first air guiding cavity 151 and the second air guiding cavity 161, so as to reduce the problem of cooking area differentiation caused by uneven left-right splitting, and effectively improve the cooking effect of the air fryer.

As shown in FIG. 2, 3, and 5, in an optional embodiment, the first heating element 221 is provided in the first air guiding cavity 151, and the first heating element 221 is adapted to be arranged around the first flow guiding protrusion 156; the second heating element 222 is provided in the second air guiding cavity 161, and the second heating element 222 is adapted to be arranged around the second flow guiding protrusion 166. By respectively arranging the first heating element 221 and the second heating element 222 surrounding the first flow guiding protrusion 156 and the second flow guiding protrusion 166 in the first air guiding cavity 151 and the second air guiding cavity 161, the air flow entering the first air guiding cavity 151 and the second air guiding cavity 161 can be well heated, avoiding the problem of cooking area differentiation caused by regional temperature differences, and effectively ensuring the cooking effect of the air fryer.

As shown in FIG. 3 and 4, in an optional embodiment, a first annular surrounding plate 1212 surrounding the first inner concave cavity 1211 is provided on the first air guide cover 121, a first inner groove 131 is provided on the first sealing member 13, and the first sealing member 13 is adapted to be clamped on the first annular surrounding plate 1212 through the first inner groove 131. In the air fryer, the first inner groove 131 is adapted to position the installation of the first sealing member 13. By positioning the installation of the first sealing member 13 through the first inner groove 131, not only can the installation difficulty of the first sealing member 13 be reduced, the installation structure of the first sealing member 13 be simplified, and the production cost and user use cost of the air fryer be lowered, but also the contact area between the first sealing member 13 and the first air guide cover 121 can be increased, the connection strength and connection stability between the first sealing member 13 and the first air guide cover 121 can be improved, and the sealing stability and sealing effect between the first air guide cover 121 and the rear side wall of the first cooking cavity 111 can be effectively ensured. Meanwhile, the first inner groove 131 is adapted to limit the installation of the first sealing member 13. By limiting the installation of the first sealing member 13 through the first inner groove 131, the contact area between the first sealing member 13 and the first air guide cover 121 can be increased, the connection strength and connection stability between the first sealing member 13 and the first air guide cover 121 can be improved, and the sealing stability and sealing effect between the first air guide cover 121 and the rear side wall of the first cooking cavity 111 can be effectively ensured.

As shown in FIG. 3 and 4, in an optional embodiment, a second annular surrounding plate 1222 surrounding the second inner concave cavity 1221 is provided on the second air guide cover 122, a second inner groove 141 is provided on the second sealing member 14, and the second sealing member 14 is adapted to be clamped on the second annular surrounding plate 1222 through the second inner groove 141. In the air fryer, the second inner groove 141 is adapted to position the installation of the second sealing member 14. By positioning the installation of the second sealing member 14 through the second inner groove 141, not only can the installation difficulty of the second sealing member 14 be reduced, the installation structure of the second sealing member 14 be simplified, and the production cost and user use cost of the air fryer be lowered, but also the contact area between the second sealing member 14 and the second air guide cover 122 can be increased, the connection strength and connection stability between the second sealing member 14 and the second air guide cover 122 can be improved, and the sealing stability and sealing effect between the second air guide cover 122 and the rear side wall of the second cooking cavity 112 can be effectively ensured. Meanwhile, the second inner groove 141 is adapted to limit the installation of the second sealing member 14. By limiting the installation of the second sealing member 14 through the second inner groove 141, the contact area between the second sealing member 14 and the second air guide cover 122 can be increased, the connection strength and connection stability between the second sealing member 14 and the second air guide cover 122 can be improved, and the sealing stability and sealing effect between the second air guide cover 122 and the rear side wall of the second cooking cavity 112 can be effectively ensured.

As shown in FIG. 3, in an optional embodiment, a first protruding part 1112 corresponding to the first sealing member 13 is provided on at least part of the rear side wall of the first cooking cavity 111, and the first sealing member 13 is at least partially in sealing fit with the first protruding part 1112. By providing the first protruding part 1112 in sealing fit with at least part of the first sealing member 13 on at least part of the rear side wall of the first cooking cavity 111, the contact area between the first sealing member 13 and the rear side wall of the first cooking cavity 111 can be increased, and the sealing stability and sealing effect between the first air guide cover 121 and the rear side wall of the first cooking cavity 111 can be effectively ensured.

As shown in FIG. 3, in an optional embodiment, a second protruding part 1122 corresponding to the second sealing member 14 is provided on at least part of the rear side wall of the second cooking cavity 112, and the second sealing member 14 is at least partially in sealing fit with the second protruding part 1122. By providing the second protruding part 1122 in sealing fit with at least part of the second sealing member 14 on at least part of the rear side wall of the second cooking cavity 112, the contact area between the second sealing member 14 and the rear side wall of the second cooking cavity 112 can be increased, and the sealing stability and sealing effect between the second air guide cover 122 and the rear side wall of the second cooking cavity 112 can be effectively ensured.

As shown in FIG. 2, 9, and 10, a heat dissipation air duct 18 communicating with the atmosphere is provided in the main body 10, the heat dissipation air duct 18 includes a first heat dissipation air duct 181 and a second heat dissipation air duct 182, a first heat dissipation assembly and a second heat dissipation assembly capable of generating heat dissipation cold air are respectively arranged in the first heat dissipation air duct 181 and the second heat dissipation air duct 182, the first heat dissipation air duct 181 is adapted to be arranged around at least part of the first cooking cavity 111 and the first inner concave cavity 1211, the second heat dissipation air duct 182 is adapted to be arranged around at least part of the second cooking cavity 112 and the second inner concave cavity 1221. By arranging the first heat dissipation air duct 181 and the second heat dissipation air duct 182 surrounding at least part of the first cooking cavity 111, the first inner concave cavity 1211, the second cooking cavity 112, and the second inner concave cavity 1221 respectively in the main body 10, the heat dissipation cold air in the first heat dissipation air duct 181 and the second heat dissipation air duct 182 can be used to dissipate heat of the first cooking cavity 111, the first inner concave cavity 1211, the second cooking cavity 112, and the second inner concave cavity 1221 respectively. This not only can reduce the outward transfer of high temperature in the first cooking cavity 111 and the second cooking cavity 112, which affects the normal operation of electrical components outside the first cooking cavity 111 and the second cooking cavity 112, but also can effectively improve the heat dissipation efficiency and heat dissipation effect of the air fryer, thereby enhancing the user experience.

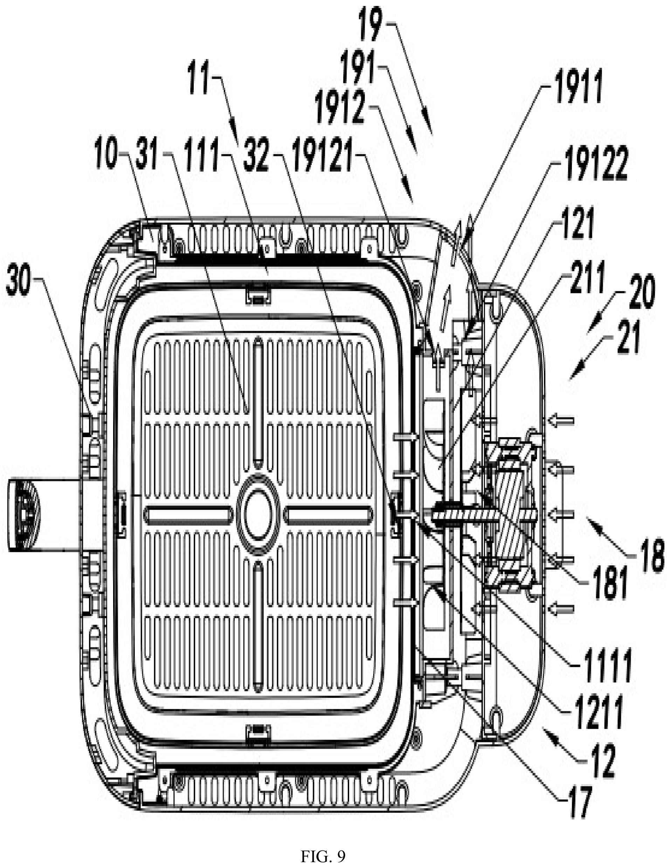

As shown in FIG. 9 and 10, in an optional embodiment, an air outlet channel 19 communicating with the atmosphere is provided in the main body 10, the air outlet channel 19 includes a first air outlet channel 191 and a second air outlet channel 192, one end of the first air outlet channel 191 has a first air outlet 1911 communicating with the atmosphere, and the other end has a first mixed air outlet 1912, the first mixed air outlet 1912 includes a first hot air outlet 19121 and a first cold air outlet 19122, the first hot air outlet 19121 is adapted to communicate with the first inner concave cavity 1211, the first cold air outlet 19122 is adapted to communicate with the first heat dissipation air duct 181. By arranging the first air outlet channel 191 communicating with the first inner concave cavity 1211 and the first heat dissipation air duct 181 respectively in the main body 10, not only can the excess circulating hot air and water vapor in the first cooking cavity 111 and the first inner concave cavity 1211 be discharged to avoid the accumulation of water vapor to form condensed water, which affects the cooking of food in the first cooking cavity 111, but also the cold-hot mixed air outlet of the air fryer can be realized, which effectively reduces the temperature of the air discharged by the air fryer, thereby reducing the risk of the user being scalded, and effectively improving the user's safety and experience of the air fryer.

As shown in FIG. 10, in an optional embodiment, one end of the second air outlet channel 192 has a second air outlet 1921 communicating with the atmosphere, and the other end has a second mixed air outlet 1922, the second mixed air outlet 1922 includes a second hot air outlet 19221 and a second cold air outlet 19222, the second hot air outlet 19221 is adapted to communicate with the second inner concave cavity 1221, the second cold air outlet 19222 is adapted to communicate with the second heat dissipation air duct 182. By arranging the second air outlet channel 192 communicating with the second inner concave cavity 1221 and the second heat dissipation air duct 182 respectively in the main body 10, not only can the excess circulating hot air and water vapor in the second cooking cavity 112 and the second inner concave cavity 1221 be discharged to avoid the accumulation of water vapor to form condensed water, which affects the cooking of food in the second cooking cavity 112, but also the cold-hot mixed air outlet of the air fryer can be realized, which effectively reduces the temperature of the air discharged by the air fryer, thereby reducing the risk of the user being scalded, and effectively improving the user's safety and experience of the air fryer.

As shown in FIG. 9 and 10, the first air outlet 1911 and the second air outlet 1921 are adapted to be provided at the rear side of the main body 10. Such an arrangement not only can hide the first air outlet 1911 and the second air outlet 1921 to improve the overall appearance of the air fryer, but also can reduce the risk of the user being scalded by the air discharged from the first air outlet 1911 and the second air outlet 1921, effectively improving the user's safety and experience of the air fryer.

### Embodiment 2

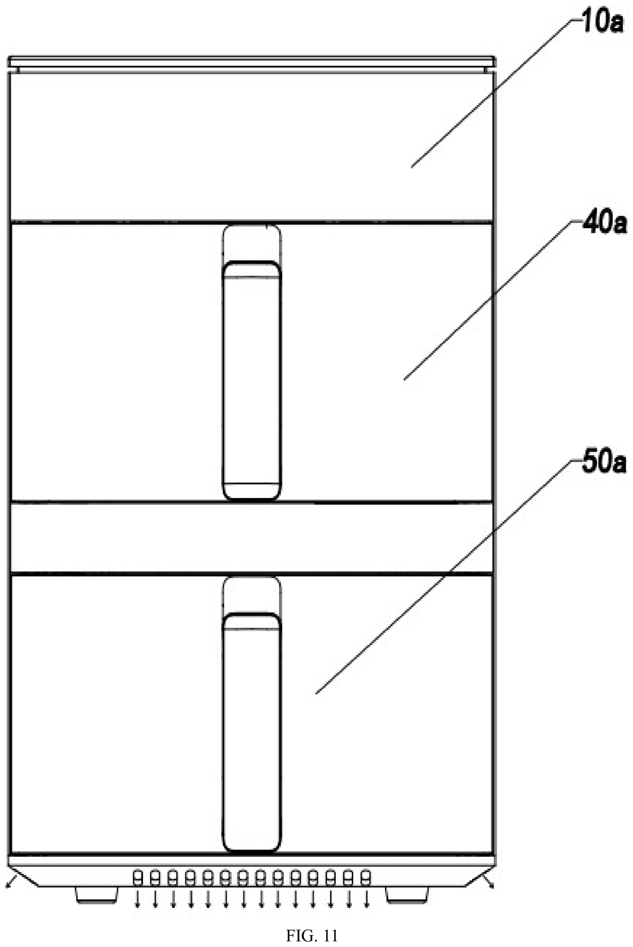

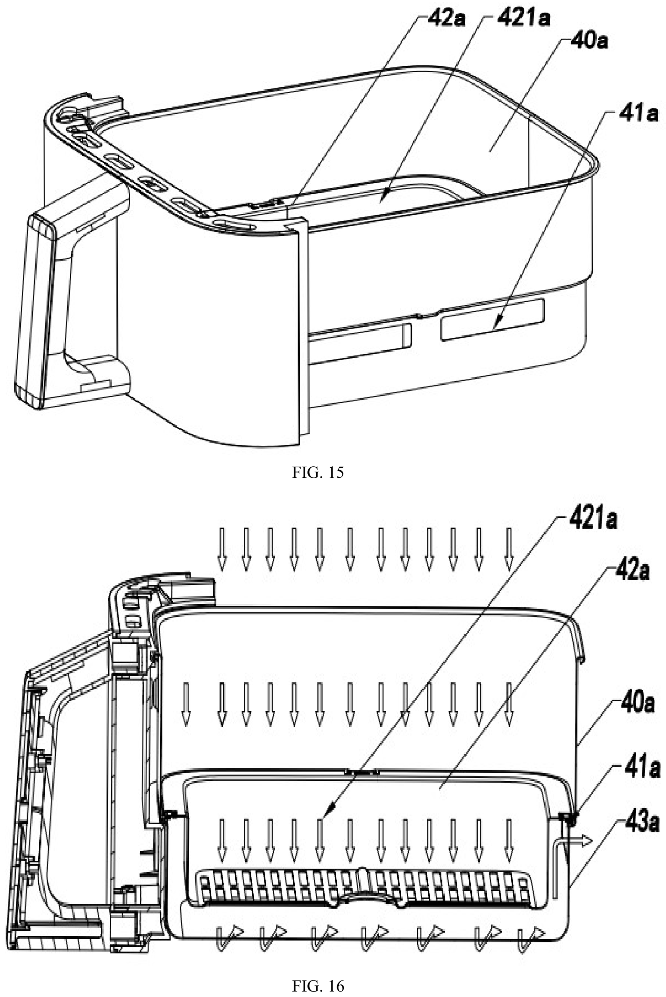

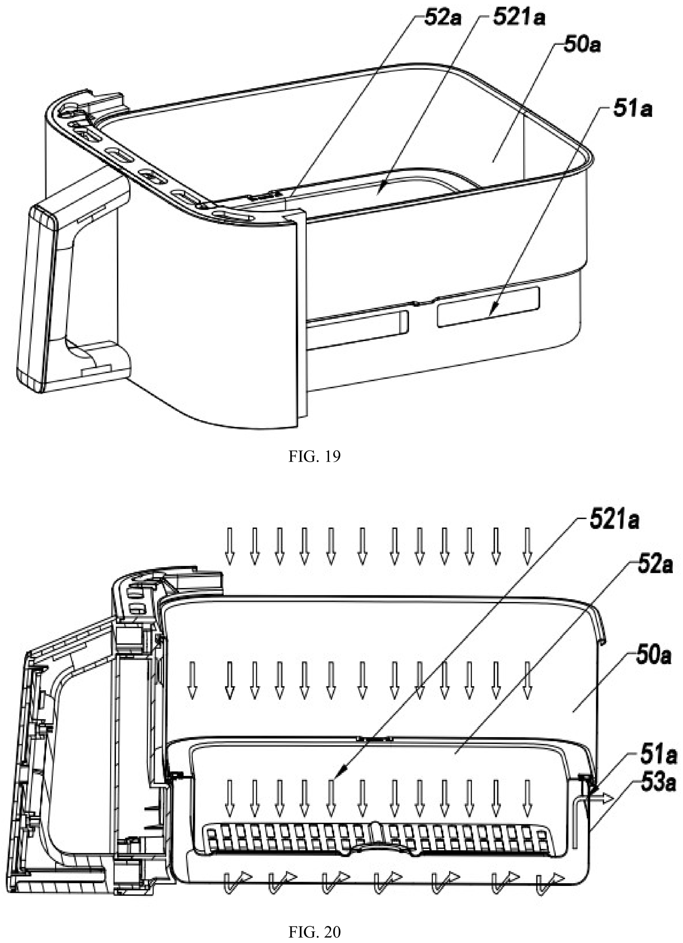

As shown in FIG. 11 to 21, the air fryer includes a main body 10a, a first cooking cavity 11a and a second cooking cavity 12a arranged at intervals up and down in the main body 10a, and a first hot air circulation system 20a and a second hot air circulation system 30a respectively communicating with the first cooking cavity 11a and the second cooking cavity 12a, the first hot air circulation system 20a and the second hot air circulation system 30a are adapted to generate circulating hot air and respectively introduce it into the first cooking cavity 11a and the second cooking cavity 12a to cook the food in the first cooking cavity 11a and the second cooking cavity 12a.

As shown in FIG. 11 to 13, a first fry basket 40a with an open top is arranged in the first cooking cavity 11a, a first inner concave cavity 13a is provided at the rear side of the first cooking cavity 11a, the first hot air circulation system 20a for generating circulating hot air is arranged in the first inner concave cavity 13a, a first air return hole 111a corresponding to the first hot air circulation system 20a is provided in the middle of the rear side wall of the first cooking cavity 11a, a first air inlet 112a communicating with the first inner concave cavity 13a is provided at the upper part of the rear side wall of the first cooking cavity 11a, a first ventilation hole 41a communicating with the first air return hole 111a is provided on the side wall of the first fry basket 40a. The circulating hot air generated by the first hot air circulation system 20a is adapted to enter the first cooking cavity 11a through the first air inlet 112a, enter the first fry basket 40a from the open top of the first fry basket 40a, and then flow back to the first inner concave cavity 13a through the first ventilation hole 41a and the first air return hole 111a.

As shown in FIG. 11 to 13, a second fry basket 50a with an open top is arranged in the second cooking cavity 12a, a second inner concave cavity 14a is provided at the rear side of the second cooking cavity 12a, the second hot air circulation system 30a for generating circulating hot air is arranged in the second inner concave cavity 14a, a second air return hole 121a corresponding to the second hot air circulation system 30a is provided in the middle of the rear side wall of the second cooking cavity 12a, a second air inlet 122a communicating with the second inner concave cavity 14a is provided at the upper part of the rear side wall of the second cooking cavity 12a, a second ventilation hole 51a communicating with the second air return hole 121a is provided on the side wall of the second fry basket 50a. The circulating hot air generated by the second hot air circulation system 30a is adapted to enter the second cooking cavity 12a through the second air inlet 122a, enter the second fry basket 50a from the open top of the second fry basket 50a, and then flow back to the second inner concave cavity 14a through the second ventilation hole 51a and the second air return hole 121a.

As shown in FIG. 11 to 13, by respectively arranging the first cooking cavity 11a, the second cooking cavity 12a, and the first hot air circulation system 20a and the second hot air circulation system 30a communicating with the first cooking cavity 11a and the second cooking cavity 12a in the main body 10a, multiple types of food can be cooked simultaneously, effectively improving the cooking efficiency and cooking effect of the air fryer. Meanwhile, by arranging the first cooking cavity 11a and the second cooking cavity 12a at intervals up and down, the space occupancy of the air fryer can be effectively reduced, and the space utilization rate can be improved. In addition, by arranging the first hot air circulation system 20a and the second hot air circulation system 30a at the rear sides of the first cooking cavity 11a and the second cooking cavity 12a respectively, lateral air outlet of the first cooking cavity 11a and the second cooking cavity 12a can be achieved, so that the circulating hot air can better heat the food in the cavities, effectively improving the food cooking efficiency and cooking effect.

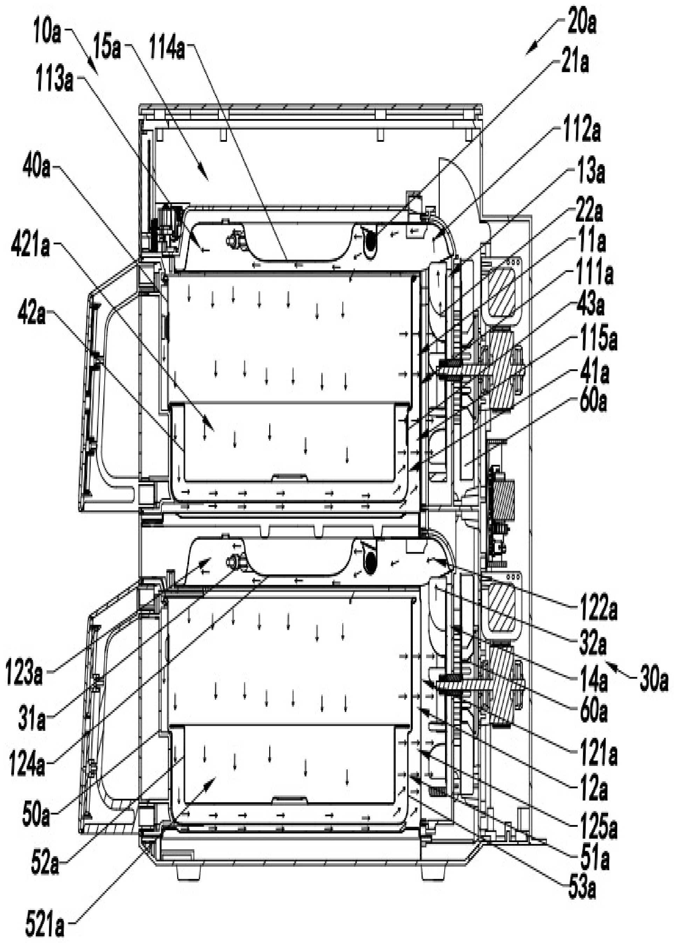

As shown in FIG. 12, 15, and 16, in an optional embodiment, a first frying plate 42a with through holes is suspended in the first fry basket 40a, and the first ventilation hole 41a is adapted to be located below the first frying plate 42a. By suspending the first frying plate 42a with through holes in the first fry basket 40a and arranging the first ventilation hole 41a below the first frying plate 42a, not only can the food in the first fry basket 40a be propped up to facilitate the circulating hot air to better heat the bottom of the food in the first fry basket 40a, but also more circulating hot air can enter the lower space of the first frying plate 42a to heat the bottom of the food in the first fry basket 40a, effectively improving the cooking efficiency and cooking effect of the food in the first fry basket 40a.

As shown in FIG. 12, 19, and 20, in an optional embodiment, a second frying plate 52a with through holes is suspended in the second fry basket 50a, and the second ventilation hole 51a is adapted to be located below the second frying plate 52a. By suspending the second frying plate 52a with through holes in the second fry basket 50a and arranging the second ventilation hole 51a below the second frying plate 52a, not only can the food in the second fry basket 50a be propped up to facilitate the circulating hot air to better heat the bottom of the food in the second fry basket 50a, but also more circulating hot air can enter the lower space of the second frying plate 52a to heat the bottom of the food in the second fry basket 50a, effectively improving the cooking efficiency and cooking effect of the food in the second fry basket 50a. As shown in FIG. 12, 16, and 20, in an optional embodiment, a first accommodating groove 421a and a second accommodating groove 521a recessed downward are respectively provided in the middle of the first frying plate 42a and the second frying plate 52a, the side parts of the first accommodating groove 421a and the second accommodating groove 521a are adapted to be closed structures, and a plurality of the through holes are provided at the bottom. By respectively providing the first accommodating groove 421a and the second accommodating groove 521a recessed downward in the middle of the first frying plate 42a and the second frying plate 52a, the amount of food that can be cooked in the first fry basket 40a and the second fry basket 50a can be increased, and the cooking efficiency of the air fryer can be improved. Meanwhile, by setting the side parts of the first accommodating groove 421a and the second accommodating groove 521a as closed structures, the circulating hot air in the upper space of the first frying plate 42a and the second frying plate 52a can be better introduced into the lower space of the first frying plate 42a and the second frying plate 52a to heat the bottom of the food in the first fry basket 40a and the second fry basket 50a, effectively improving the cooking efficiency and cooking effect of the food in the first fry basket 40a and the second fry basket 50a.

As shown in FIG. 12, in an optional embodiment, the first ventilation hole 41a is adapted to correspond to at least part of the first air return hole 111a, and the second ventilation hole 51a is adapted to correspond to at least part of the second air return hole 121a. By setting the first ventilation hole 41a and the second ventilation hole 51a to correspond to at least part of the first air return hole 111a and the second air return hole 121a respectively, the circulating hot air in the first fry basket 40a and the second fry basket 50a can flow back to the first inner concave cavity 13a and the second inner concave cavity 14a better and faster through the first ventilation hole 41a, the first air return hole 111a, the second ventilation hole 51a, and the second air return hole 121a, effectively improving the thermal circulation efficiency of the air fryer, thereby enhancing the cooking efficiency of the air fryer.

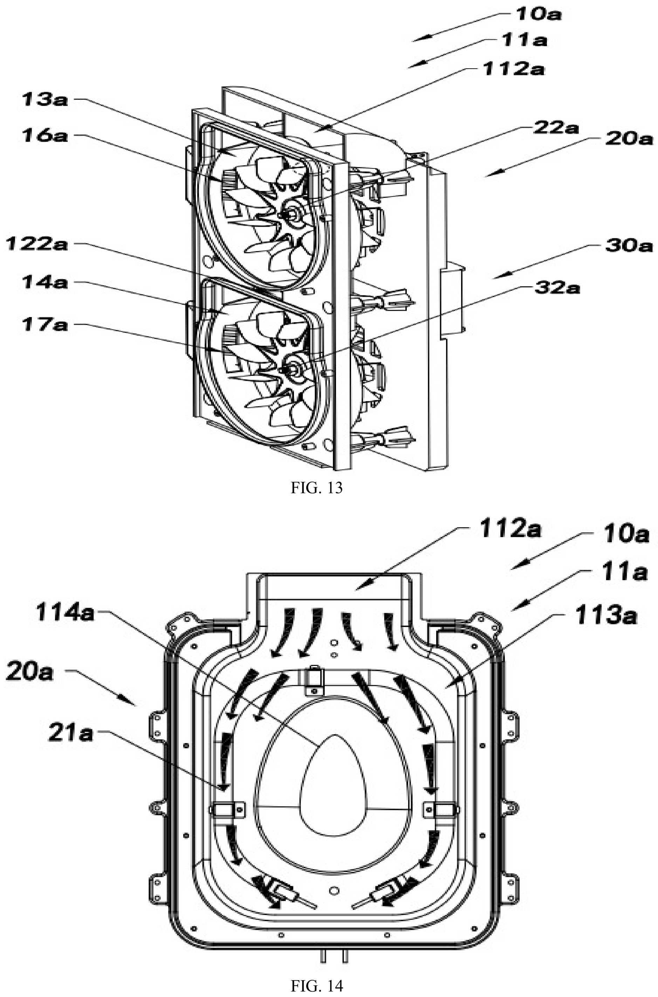

As shown in FIG. 12 and 14, in an optional embodiment, a first air guiding cavity 113a with a downward opening and communicating with the first air inlet 112a is provided at the top of the first cooking cavity 11a, and the first air guiding cavity 113a is at least partially corresponding to the open top of the first fry basket 40a. By providing the first air guiding cavity 113a corresponding to the open top of the first fry basket 40a at the top of the first cooking cavity 11a, the circulating hot air flowing out of the first air inlet 112a can be guided downward into the first fry basket 40a to heat the food in the first fry basket 40a, which can effectively improve the cooking efficiency of the food in the first fry basket 40a.

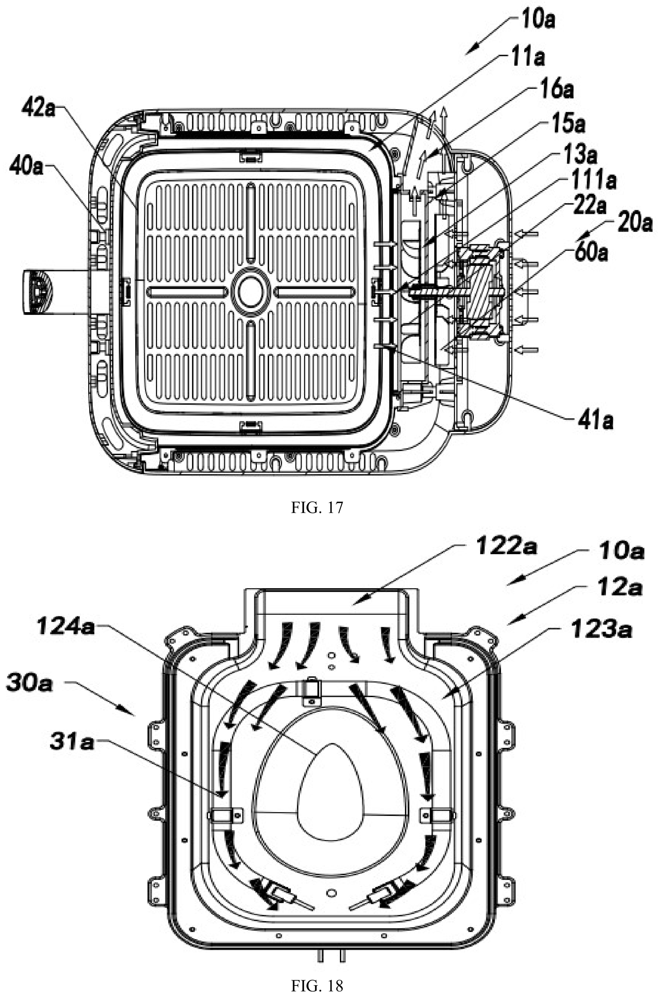

As shown in FIG. 12 and 18, a second air guiding cavity 123a with a downward opening and communicating with the second air inlet 122a is provided at the top of the second cooking cavity 12a, and the second air guiding cavity 123a is at least partially corresponding to the open top of the second fry basket 50a. By providing the second air guiding cavity 123a corresponding to the open top of the second fry basket 50a at the top of the second cooking cavity 12a, the circulating hot air flowing out of the second air inlet 122a can be guided downward into the second fry basket 50a to heat the food in the second fry basket 50a, which can effectively improve the cooking efficiency of the food in the second fry basket 50a.

As shown in FIG. 12 and 14, in an optional embodiment, a first flow guiding protrusion 114a protruding downward is provided in the middle of the first air guiding cavity 113a, and the first flow guiding protrusion 114a is adapted to be located directly above the open top of the first fry basket 40a. By providing the first flow guiding protrusion 114a corresponding to the open top of the first fry basket 40a in the first air guiding cavity 113a, the circulating hot air in the first air guiding cavity 113a can be better dispersed and then more uniformly guided downward into the first fry basket 40a to heat the food in the first fry basket 40a, effectively improving the cooking efficiency and cooking effect of the food in the first fry basket 40a.

As shown in FIG. 12 and 18, a second flow guiding protrusion 124a protruding downward is provided in the middle of the second air guiding cavity 123a, and the second flow guiding protrusion 124a is adapted to be located directly above the open top of the second fry basket 50a. By providing the second flow guiding protrusion 124a corresponding to the open top of the second fry basket 50a in the second air guiding cavity 123a, the circulating hot air in the second air guiding cavity 123a can be better dispersed and then more uniformly guided downward into the second fry basket 50a to heat the food in the second fry basket 50a, effectively improving the cooking efficiency and cooking effect of the food in the second fry basket 50a.

As shown in FIG. 12 and 14, in an optional embodiment, the first hot air circulation system 20a includes a first heating element 21a, and the first heating element 21a is adapted to be arranged in the first air guiding cavity 113a and around the first flow guiding protrusion 114a, the first heating element 21a is adapted to heat the circulating air flow in the first air guiding cavity 113a. By arranging the first heating element 21a in the first air guiding cavity 113a and around the first flow guiding protrusion 114a, the circulating air flow to be entered into the first fry basket 40a can be heated better and more uniformly, effectively improving the heating efficiency and heating effect. Moreover, the heat loss of the circulating hot air when entering the first fry basket 40a can be reduced, effectively improving the cooking efficiency and cooking effect. In addition, by arranging the first heating element 21a at the top of the first cooking cavity 11a, the top of the food in the first fry basket 40a can also be heated by the first heating element 21a, effectively improving the cooking efficiency and user experience of the air fryer.

As shown in FIG. 12 and 18, in an optional embodiment, the second hot air circulation system 30a includes a second heating element 31a, and the second heating element 31a is adapted to be arranged in the second air guiding cavity 123a and around the second flow guiding protrusion 124a. By arranging the second heating element 31a in the second air guiding cavity 123a and around the second flow guiding protrusion 124a, the circulating air flow to be entered into the second fry basket 50a can be heated better and more uniformly, effectively improving the heating efficiency and heating effect. Moreover, the heat loss of the circulating hot air when entering the second fry basket 50a can be reduced, effectively improving the cooking efficiency and cooking effect. In addition, by arranging the second heating element 31a at the top of the second cooking cavity 12a, the top of the food in the second fry basket 50a can also be heated by the second heating element 31a, effectively improving the cooking efficiency and user experience of the air fryer.

As shown in FIG. 12 and 13, in an optional embodiment, the first hot air circulation system 20a further includes a first thermal circulation fan 22a, and the projections of the first thermal circulation fan 22a and the first air inlet 112a on the rotation axis of the first thermal circulation fan 22a at least partially overlap, when the projections of the first thermal circulation fan 22a and the first air inlet 112a on the rotation axis of the first thermal circulation fan 22a at least partially overlap, the first air inlet 112a corresponds to at least part of the first thermal circulation fan 22a. By setting the first air inlet 112a to correspond to at least part of the first thermal circulation fan 22a, the circulating air flow generated by the first thermal circulation fan 22a can enter the first cooking cavity 11a faster and better, thereby improving the thermal circulation efficiency in the first cooking cavity 11a, and further enhancing the cooking efficiency of the air fryer.

As shown in FIG. 12 and 13, in an optional embodiment, the second hot air circulation system 30a further includes a second thermal circulation fan 32a, and the projections of the second thermal circulation fan 32a and the second air inlet 122a on the rotation axis of the second thermal circulation fan 32a at least partially overlap, when the projections of the second thermal circulation fan 32a and the second air inlet 122a on the rotation axis of the second thermal circulation fan 32a at least partially overlap, the second air inlet 122a corresponds to at least part of the second thermal circulation fan 32a. By setting the second air inlet 122a to correspond to at least part of the second thermal circulation fan 32a, the circulating air flow generated by the second thermal circulation fan 32a can enter the second cooking cavity 12a faster and better, thereby improving the thermal circulation efficiency in the second cooking cavity 12a, and further enhancing the cooking efficiency.

As shown in FIG. 12, 15, and 16, in an optional embodiment, a first recessed part 43a recessed inward is provided at the lower part of the side wall of the first fry basket 40a, the first ventilation hole 41a is provided on the first recessed part 43a, and a first hot air gap 115a communicating with the first air return hole 111a is adapted to be formed between the first recessed part 43a and the inner wall of the first cooking cavity 11a, the first hot air gap 115a is adapted to provide sufficient flow space for the circulating hot air. By providing the first hot air gap 115a between the lower part of the first fry basket 40a and the inner wall of the first cooking cavity 11a, the circulating hot air flowing out of the first fry basket 40a can quickly flow back to the first inner concave cavity 13a through the first hot air gap 115a, thereby effectively improving the thermal circulation efficiency in the first cooking cavity 11a, and further enhancing the cooking efficiency.

As shown in FIG. 12, 19, and 20, a second recessed part 53a recessed inward is provided at the lower part of the side wall of the second fry basket 50a, the second ventilation hole 51a is provided on the second recessed part 53a, and a second hot air gap 125a communicating with the second air return hole 121a is adapted to be formed between the second recessed part 53a and the inner wall of the second cooking cavity 12a, the second hot air gap 125a is adapted to provide sufficient flow space for the circulating hot air. By providing the second hot air gap 125a between the lower part of the second fry basket 50a and the inner wall of the second cooking cavity 12a, the circulating hot air flowing out of the second fry basket 50a can quickly flow back to the second inner concave cavity 14a through the second hot air gap 125a, thereby effectively improving the thermal circulation efficiency in the second cooking cavity 12a, and further enhancing the cooking efficiency.

As shown in FIG. 17, in an optional embodiment, a heat dissipation air duct 15a communicating with the atmosphere is provided in the main body 10a, a heat dissipation assembly 60a is arranged in the heat dissipation air duct 15a, a first air outlet channel 16a is provided outside the first cooking cavity 11a, one end of the first air outlet channel 16a communicates with the first inner concave cavity 13a and the heat dissipation air duct 15a, and the other end communicates with the atmosphere, the first air outlet channel is suitable for discharging excess circulating hot air in the first cooking cavity. By communicating the first air outlet channel with the heat dissipation air duct, the cold-hot mixed air outlet of the first cooking cavity can be achieved, which effectively reduces the temperature of the air discharged by the air fryer, avoids scalding the user, and thus improves the user's use safety and experience.

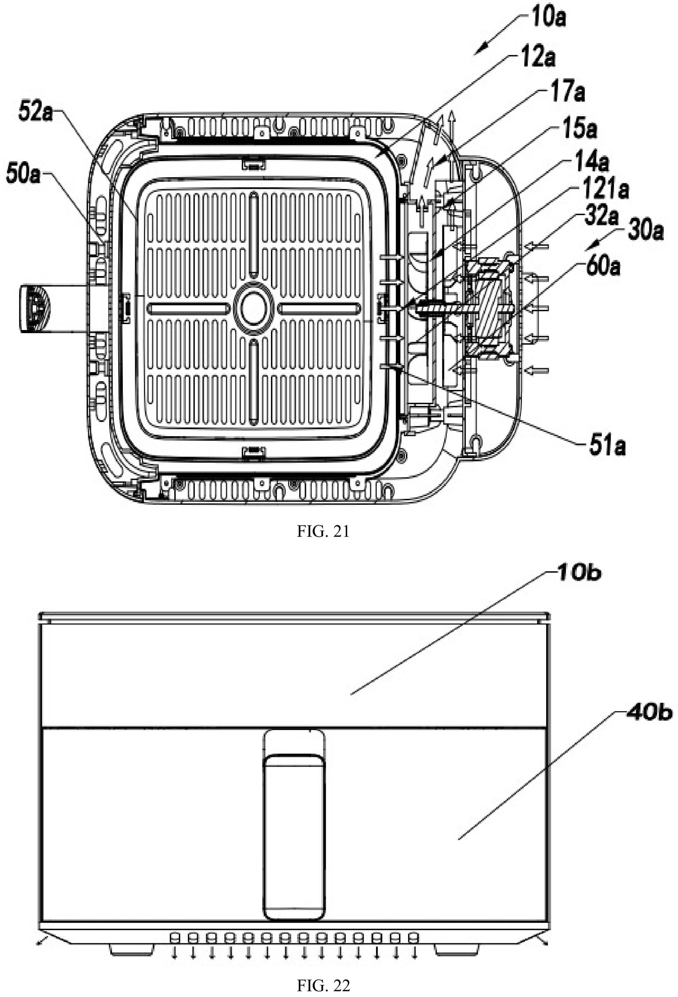

As shown in FIG. 21, a second air outlet channel 17a is provided outside the second cooking cavity 12a. One end of the second air outlet channel 17a communicates with the second inner concave cavity 14a and the heat dissipation air duct 15a, and the other end communicates with the atmosphere, the second air outlet channel 17a is suitable for discharging excess circulating hot air in the second cooking cavity 12a. By communicating the second air outlet channel 17a with the heat dissipation air duct 15a, the cold-hot mixed air outlet of the second cooking cavity 12a can be achieved, which effectively reduces the temperature of the air discharged by the air fryer, avoids scalding the user, and thus improves the user's use safety and experience.

### Embodiment 3

As shown in FIG. 22 to 26, taking one of the upper and lower dual cores as an example for detailed description. The air fryer includes a main body 10b and a cooking cavity 11b with an open front side arranged in the main body 10b, an inner concave cavity 12b communicating with the cooking cavity 11b is provided outside the cooking cavity 11b, a thermal circulation fan 20b for generating circulating air flow is arranged in the inner concave cavity 12b, a heating assembly 30b is provided on the air flow circulation path of the thermal circulation fan 20b, the heating assembly 30b is adapted to heat the circulating air flow generated by the thermal circulation fan 20b to form circulating hot air, thereby heating the food in the cooking cavity 11b.

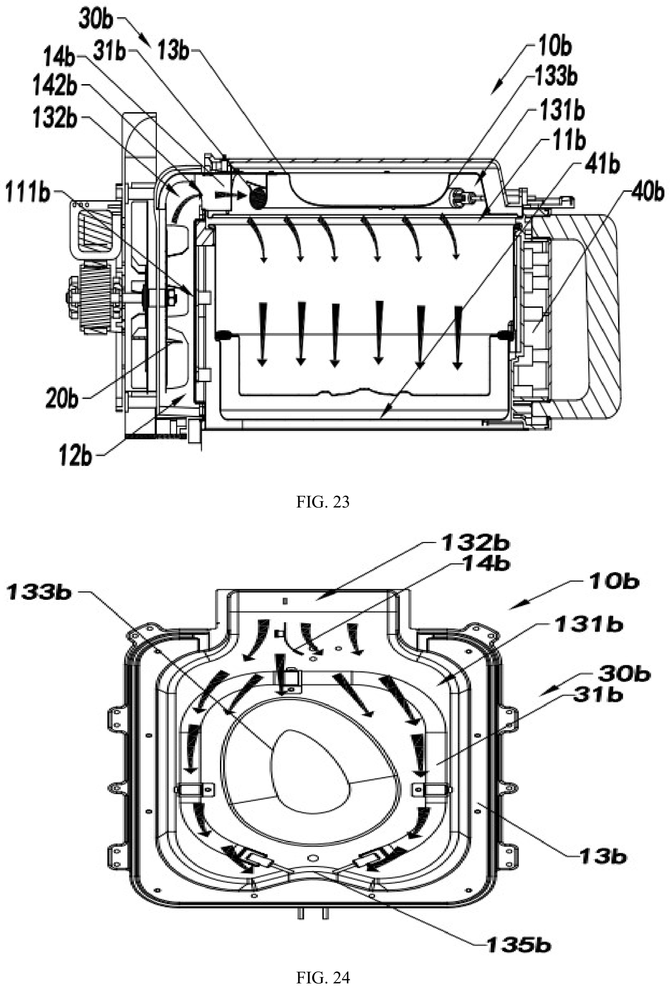

As shown in FIG. 23 to 26, in an optional embodiment, an air duct plate 13b is provided at the top of the cooking cavity 11b, the air duct plate 13b is adapted to be recessed upward to form an air guiding cavity 131b with a downward opening, an air inlet 132b is provided on one side of the air guiding cavity 131b, and the air inlet 132b is adapted to communicate with the inner concave cavity 12b, a flow guiding protrusion 133b protruding downward is provided in the middle of the air guiding cavity 131b, a fry basket 40b with an open top is detachably arranged in the cooking cavity 11b through the open front side, the flow guiding protrusion 133b is adapted to be located directly above the open top of the fry basket 40b, a hot air hole 41b communicating with the cooking cavity 11b is provided on the fry basket 40b, an air return hole 111b corresponding to the thermal circulation fan 20b is provided on the side wall of the cooking cavity 11b, the circulating air flow generated by the thermal circulation fan 20b is adapted to enter the air guiding cavity 131b through the air inlet 132b, be guided downward into the fry basket 40b by the flow guiding protrusion 133b, and flow back to the inner concave cavity 12b through the hot air hole 41b and the air return hole 111b. By providing the air guiding cavity 131b with a downward opening at the top of the cooking cavity 11b and arranging the flow guiding protrusion 133b corresponding to the open top of the fry basket 40b in the middle of the air guiding cavity 131b, the circulating hot air generated by the thermal circulation fan 20b can be split and then more uniformly introduced into the fry basket 40b to heat the food in the fry basket 40b, effectively improving the cooking effect.

As shown in FIG. 24 to 26, the width of the flow guiding protrusion 133b is preferably designed to gradually increase from the end close to the air inlet 132b to the end far away from the air inlet 132b. By designing the width of the flow guiding protrusion 133b to gradually increase from the end close to the air inlet 132b to the end far away from the air inlet 132b, the flow guiding protrusion 133b can better split the circulating hot air entering the air guiding cavity 131b through the air inlet 132b. This not only reduces the resistance encountered by the circulating hot air when being split, thereby improving the thermal circulation efficiency of the circulating hot air in the cooking cavity 11b and further enhancing the cooking efficiency, but also reduces the noise of the air fryer during operation, effectively improving the user experience.

As shown in FIG. 24 to 26, the end of the flow guiding protrusion 133b close to the air inlet 132b is adapted to be biased toward the rotation direction of the thermal circulation fan 20b. When the thermal circulation fan 20b rotates, it is adapted to generate spiral air flow, after entering the air inlet 131b, the spiral air flow will form a high-pressure area in the same direction as the rotation direction of the thermal circulation fan 20b and a low-pressure area opposite to the rotation direction of the thermal circulation fan 20b. Therefore, by biasing the end of the flow guiding protrusion 133b close to the air inlet 132b toward the rotation direction of the thermal circulation fan 20b, the flow guiding protrusion 133b can better split the circulating hot air entering the air guiding cavity through the air inlet, reducing the problem of cooking area differentiation caused by uneven left-right splitting and effectively improving the cooking effect.

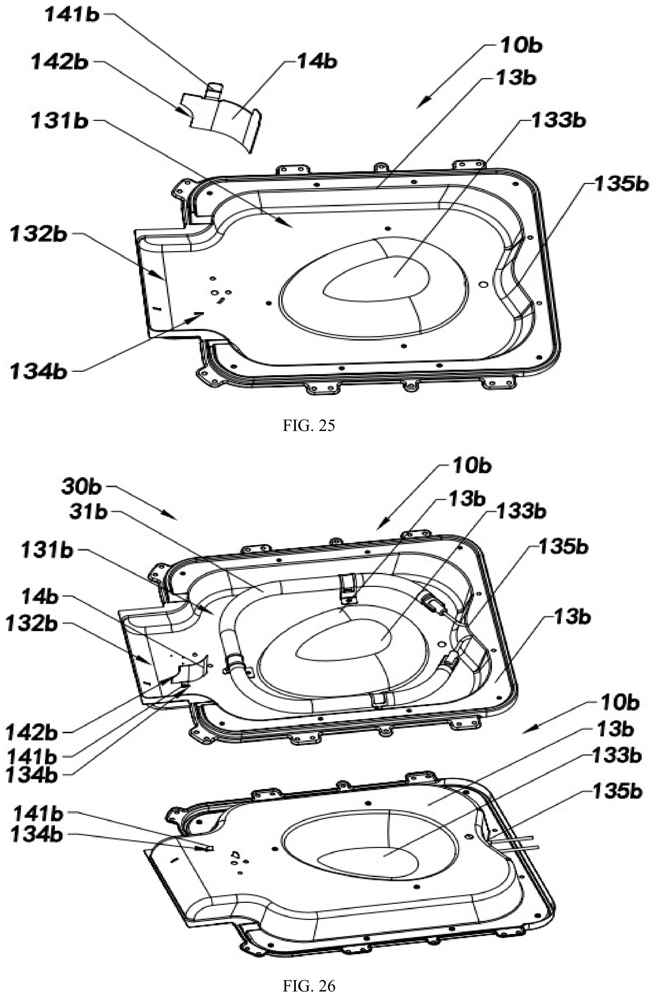

As shown in FIG. 23 and 26, in an optional embodiment, the side wall of the flow guiding protrusion 133b is adapted to be an arc-shaped flow guiding structure extending obliquely inward from the end close to the air duct plate 13b to the end far away from the air duct plate 13b. By setting the side wall of the flow guiding protrusion 133b as an arc-shaped flow guiding structure extending obliquely inward from the end close to the air duct plate 13b to the end far away from the air duct plate 13b, the flow guiding protrusion 133b can better introduce the circulating hot air in the air guiding cavity 131b into the fry basket 40b, thereby improving the cooking efficiency of the air fryer. Moreover, it can avoid regional accumulation of the circulating hot air when the flow guiding protrusion 133b introduces the circulating hot air into the fry basket 40b, effectively ensuring the cooking effect of the air fryer.

As shown in FIG. 24 and 26, in an optional embodiment, an air guiding fin 14b is provided in the air guiding cavity 131b adjacent to the air inlet 132b, the air guiding fin 14b is adapted to extend arcuately toward the middle of the air guiding cavity 131b, and the bending direction of the air guiding fin 14b is opposite to the rotation direction of the thermal circulation fan 20b. By arranging the air guiding fin 14b in the air guiding cavity 131b adjacent to the air inlet 132 and setting the bending direction of the air guiding fin 14b to be opposite to the rotation direction of the thermal circulation fan 20b, not only can the circulating hot air entering the air guiding cavity 131b through the air inlet 132b be split, but also the split circulating hot air can be guided to both sides of the air guiding cavity 131b to cooperate with the flow guiding protrusion 133b to more uniformly introduce the circulating hot air into the fry basket 40b, effectively improving the cooking effect of the food in the fry basket 40b.

As shown in FIG. 24 and 26, in an optional embodiment, the air guiding fin 14b is adapted to be arranged on the side of the air guiding cavity 131b biased toward the rotation direction of the thermal circulation fan 20b. When the thermal circulation fan 20b rotates, it is adapted to generate spiral air flow, after entering the air inlet 131b, the spiral air flow will form a high-pressure area in the same direction as the rotation direction of the thermal circulation fan 20b and a low-pressure area opposite to the rotation direction of the thermal circulation fan 20b. The air intake volume in the high-pressure area is larger, and the air intake volume in the low-pressure area is smaller. Therefore, by arranging the air guiding fin 14b on the side of the air guiding cavity 131b biased toward the rotation direction of the thermal circulation fan 20b, the air flow in the high-pressure area can be split and introduced into the low-pressure area, making the distribution of the air flow split and introduced into the air guiding cavity 131b by the air guiding fin 14b more uniform. Thus, the distribution of the air flow guided into the fry basket 40b by the air guiding cavity 131b and the flow guiding protrusion 133b is more uniform, which can effectively improve the cooking effect.

As shown in FIG. 25 and 26, in an optional embodiment, a plurality of bendable bending parts 141b are provided on the air guiding fin 14b, a plurality of fixing holes 134b for the bending parts 141b to pass through are provided on the air duct plate 13b, the bending parts 141b are adapted to pass through the fixing holes 141b from the bottom of the air duct plate 13b and be bent to abut against the top of the air duct plate 13b. The air fryer can fix the air guiding fin 14b on the air duct plate 13b by bending the bending parts 141b through providing a plurality of bendable bending parts 141b on the air guiding fin 14b. Meanwhile, by providing a plurality of bendable bending parts 141b on the air guiding fin 14b, not only can the connection stability between the air guiding fin 14b and the air duct plate 13b be ensured, but also the installation, disassembly, and replacement of the air guiding fin 14b are facilitated, which can effectively improve the usability of the air guiding fin 14b.

As shown in FIG. 25 and 26, in an optional embodiment, a notch 142b is provided at the end of the air guiding fin 14b close to the air inlet 132b, the notch 142b is adapted to be an arc-shaped inner concave structure extending obliquely inward from the end of the air guiding fin 14b close to the air duct plate 13b to the end far away from the air duct plate 13b. By providing the notch 142b at the end of the air guiding fin 14b close to the air inlet 132b, the circulating hot air entering the air guiding cavity 131b through the air inlet 132b can be better split. This not only reduces the resistance encountered by the circulating hot air when being split, thereby improving the thermal circulation efficiency of the circulating hot air in the cooking cavity 11b and further enhancing the cooking efficiency, but also reduces the noise of the air fryer during operation, effectively improving the user experience.

As shown in FIG. 23, in an optional embodiment, the bottom wall of the air inlet 132b is arc-shaped, and the projections of the thermal circulation fan 20b and the air inlet 132b on the rotation axis of the thermal circulation fan 20b at least partially overlap. When the projections of the thermal circulation fan 20b and the air inlet 132b on the rotation axis of the thermal circulation fan 20b overlap, the air inlet 132b is directly opposite the outer side of the thermal circulation fan 20b. Therefore, by setting the bottom wall of the air inlet 132b to be arc-shaped and the projections of the thermal circulation fan 20b and the air inlet 132b on the rotation axis of the thermal circulation fan 20b to overlap, the air inlet 132b can better guide the circulating hot air generated by the thermal circulation fan 20b, so as to improve the rate at which the circulating hot air enters the air guiding cavity 131b and the cooking cavity 11b through the air inlet 132b, thereby improving the thermal circulation efficiency of the circulating hot air in the air guiding cavity 131b and the cooking cavity 11b and further enhancing the cooking efficiency of the air fryer.

In an optional embodiment, as shown in FIG. 24 to 26, the side wall of the air guiding cavity 131b opposite to the air inlet 132b protrudes toward the flow guiding protrusion 133b to form a flow guiding part 135b. By providing the flow guiding part 135b protruding toward the flow guiding protrusion 133b on the side of the air guiding cavity 131b opposite to the air inlet 132b, the air flow on both sides of the air guiding cavity 131b can be guided toward the middle of the air guiding cavity 131b and then downward into the fry basket 40b through the flow guiding protrusion 133b. This avoids the air flow on both sides of the air guiding cavity 131b from colliding to form turbulent flow, which affects the thermal circulation speed in the cooking cavity 11b, and effectively improves the cooking efficiency of the air fryer.

As shown in FIG. 23 and 24, in an optional embodiment, the heating assembly 30b is provided in the air guiding cavity 131b, the heating assembly 30b includes a heating element 31b, and the heating element 31b is adapted to be arranged around the flow guiding protrusion 133b. By arranging the heating element 31b in the air guiding cavity 131b and around the flow guiding protrusion 133b, the air flow entering the flow guiding cavity 131b can be well heated, avoiding the problem of cooking area differentiation caused by regional temperature differences, and effectively ensuring the cooking effect of the air fryer.

### Embodiment 4

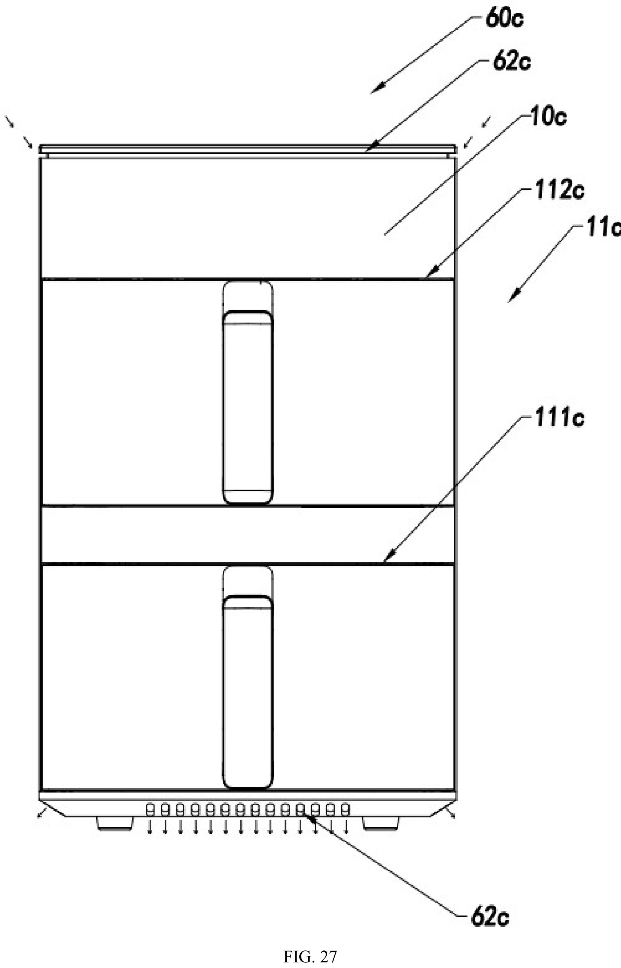

As shown in FIG. 27 to 31, the air fryer includes a main body 10c, a cooking cavity 11c is arranged in the main body 10c, a inner concave cavity 12c and a heat dissipation air cavity 13c are sequentially provided at the rear side of the cooking cavity 11c, the inner concave cavity 12c communicates with the cooking cavity 11c, a thermal circulation fan 20c for generating circulating air flow is arranged in the inner concave cavity 12c, a heating assembly 30c is provided on the air flow circulation path of the thermal circulation fan 20c, the heating assembly 30c is adapted to heat the circulating air flow to form circulating hot air, thereby heating the food in the cooking cavity 11c, a hot air outlet 121c is provided on the side wall of the inner concave cavity 12c opposite to the thermal circulation fan 20c, an air outlet 14c is provided on the side wall of the main body 10c corresponding to the hot air outlet 12c, an air outlet channel 15c communicating with the hot air outlet 12c and the air outlet 14c is provided in the main body 10c, a heat dissipation fan 40c for generating heat dissipation cold air is arranged in the heat dissipation air cavity 13c, the heat dissipation air cavity 13c is provided with a cold air outlet 131c communicating with the air outlet channel 15c. When the air fryer is in use, at least part of the circulating hot air in the cooking cavity 11c enters the air outlet channel 15c through the hot air outlet 121c, mixes with the heat dissipation cold air generated by the heat dissipation fan 40c, and is discharged from the air outlet 14c. Therefore, the air fryer can discharge excess circulating hot air in the cooking cavity 11c by providing the air outlet channel 15c at the rear side of the cooking cavity 11c. Meanwhile, by communicating the heat dissipation air cavity 13c with the air outlet channel 15c, the heat dissipation cold air generated by the heat dissipation fan 40c in the heat dissipation air cavity 13c can be used to dissipate heat of the circulating hot air in the air outlet channel 15c, thereby reducing the temperature of the air discharged from the air outlet 14c. This not only can avoid overheating of the external wall and/or objects of the main body 10c, but also can reduce the risk of the user being scalded, effectively improving the user's safety and experience.

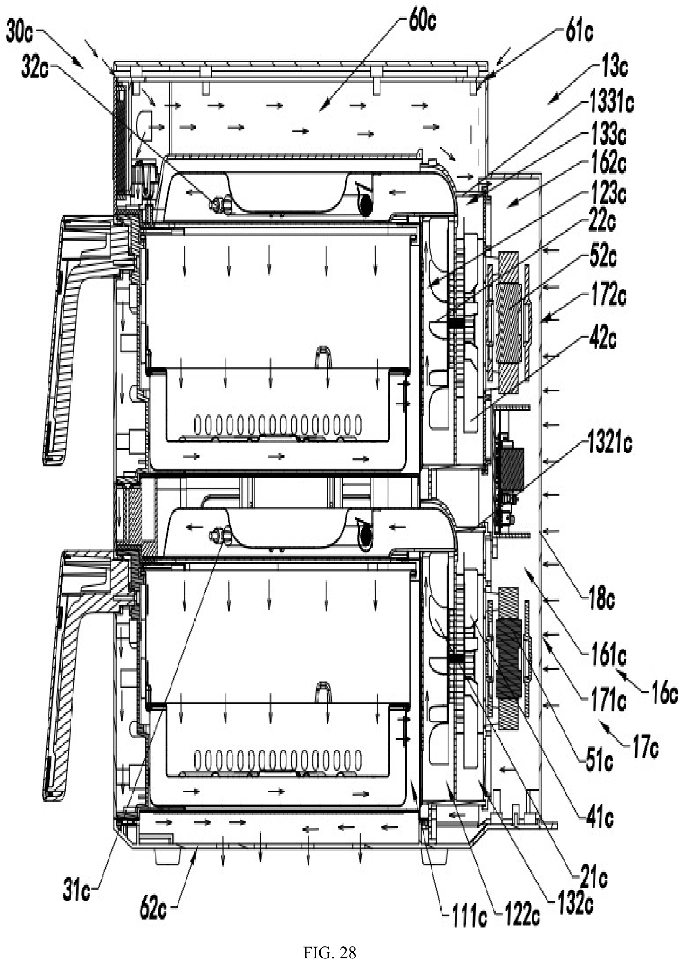

As shown in FIG. 27 and 28, in an optional embodiment, the cooking cavity 11c includes a first cooking cavity 111c and a second cooking cavity 112c arranged at intervals up and down, a first inner concave cavity 122c and a first heat dissipation air cavity 132c are sequentially provided at the rear side of the first cooking cavity 111c, the first inner concave cavity 122c communicates with the first cooking cavity 111c, a first thermal circulation fan 21c is arranged in the first inner concave cavity 122c, a first heating assembly 31c is provided on the air flow circulation path of the first thermal circulation fan 21c, a first hot air outlet 1211c is provided on the side wall of the first inner concave cavity 122c opposite to the first thermal circulation fan 21c, a first air outlet 141c is provided on the side wall of the main body 10c corresponding to the first hot air outlet 1211c, a first air outlet channel 151c communicating with the first hot air outlet 1211c and the first air outlet 141c is provided in the main body 10c, a first heat dissipation fan 41c is arranged in the first heat dissipation air cavity 132c, the first heat dissipation air cavity 132c is provided with a first cold air outlet 1311c communicating with the first air outlet channel 151c; a second inner concave cavity 123c and a second heat dissipation air cavity 133c are sequentially provided at the rear side of the second cooking cavity 112c, the second inner concave cavity 123c communicates with the second cooking cavity 112c, a second thermal circulation fan 22c is arranged in the second inner concave cavity 123c, a second heating assembly 32c is provided on the air flow circulation path of the second thermal circulation fan 22c, a second hot air outlet 1212c is provided on the side wall of the second inner concave cavity 123c opposite to the second thermal circulation fan 22c, a second air outlet 142c is provided on the side wall of the main body 10c corresponding to the second hot air outlet 1212c, a second air outlet channel 152c communicating with the second hot air outlet 1212c and the second air outlet 142c is provided in the main body 10c, a second heat dissipation fan 42c is arranged in the second heat dissipation air cavity 133c, the second heat dissipation air cavity 133c is provided with a second cold air outlet 1312c communicating with the second air outlet channel 152c. By arranging two cooking cavities arranged at intervals up and down in the main body 10c, the air fryer can not only cook multiple types of food simultaneously to meet the user's diverse cooking needs and effectively improve the cooking efficiency, but also reduce the kitchen space occupancy of the air fryer, thereby improving the space utilization rate of the kitchen and further enhancing the user experience. Meanwhile, by respectively arranging two heat dissipation air cavities at the rear sides of the two cooking cavities, the air fryer can use the heat dissipation cold air in the two heat dissipation air cavities to dissipate heat of the two cooking cavities respectively, thereby effectively reducing the temperature of the main body 10c. In addition, by respectively arranging two air outlet channels at the rear sides of the two cooking cavities and communicating the two air outlet channels with the two heat dissipation air cavities respectively, the air fryer can not only realize the separate discharge of the circulating hot air in the two cooking cavities, effectively improving the discharge efficiency of the circulating hot air in the two cooking cavities, but also use the heat dissipation cold air in the two heat dissipation air cavities to dissipate heat of the circulating hot air in the two air outlet channels respectively, thereby reducing the temperature of the air discharged from the two air outlet channels and further reducing the risk of the user being scalded, effectively improving the user's safety.

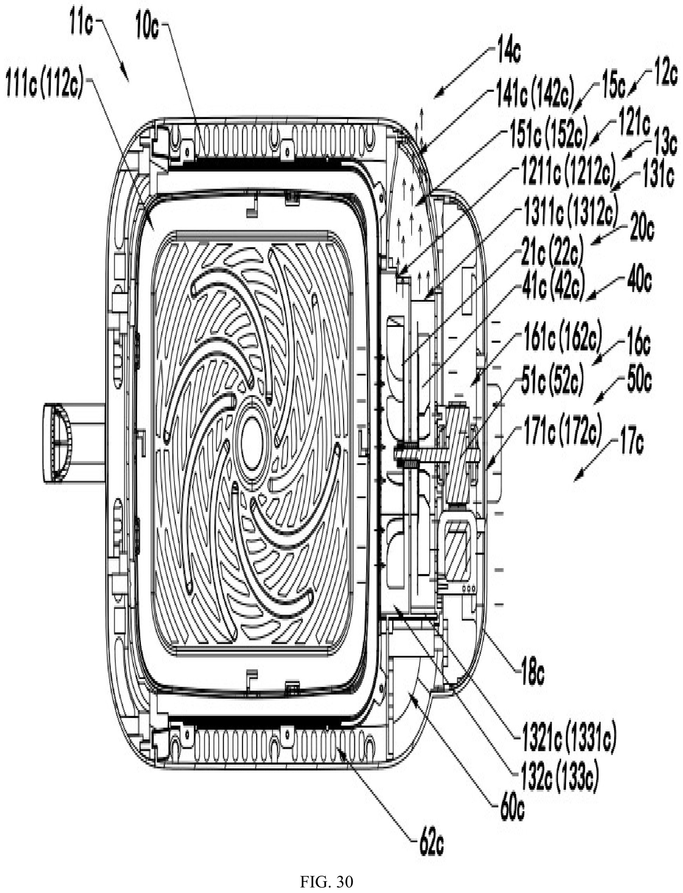

As shown in FIG. 30, in an optional embodiment, a first enclosure 1321c forming at least part of the first heat dissipation air cavity 132c is provided outside the first heat dissipation fan 41c, and the first cold air outlet 1311c is provided on the first enclosure 1321c; a second enclosure 1331c forming at least part of the second heat dissipation air cavity 133c is provided outside the second heat dissipation fan 42c, and the second cold air outlet 1312c is provided on the second enclosure 1331c; the first enclosure 1321c and the second enclosure 1331c are adapted to play a guiding role. By respectively arranging the first enclosure 1321c and the second enclosure 1331c outside the first heat dissipation fan 41c and the second heat dissipation fan 42c, the heat dissipation cold air generated by the first heat dissipation fan 41c and the second heat dissipation fan 42c can be collected and then intensively guided out from the first cold air outlet 1311c and the second cold air outlet 1312c respectively to dissipate heat of the circulating hot air in the first air outlet channel 151c and the second air outlet channel 152c. This not only can effectively improve the heat dissipation efficiency and heat dissipation effect of the first heat dissipation fan 41c and the second heat dissipation fan 42c, but also can effectively reduce the temperature of the air discharged from the first air outlet channel 151c and the second air outlet channel 152c, thereby avoiding scalding the user and effectively improving the user's safety.

As shown in FIG. 30, in an optional embodiment, the projections of the first cold air outlet 1311c and the first heat dissipation fan 41c on the rotation axis of the first heat dissipation fan 41c at least partially overlap; the projections of the second cold air outlet 1312c and the second heat dissipation fan 412c on the rotation axis of the second heat dissipation fan 42c at least partially overlap. Such an arrangement enables the heat dissipation cold air generated by the first heat dissipation fan 41c and the second heat dissipation fan 42c to enter the first air outlet channel 151c and the second air outlet channel 152c better and faster through the first cold air outlet 1311c and the second cold air outlet 1312c, thereby dissipating heat of the circulating hot air in the first air outlet channel 151c and the second air outlet channel 152c and effectively improving the heat dissipation efficiency and heat dissipation effect.

As shown in FIG. 28 and 30, in an optional embodiment, an installation cavity 16c is provided at the rear side of the heat dissipation air cavity 13c, a drive system 50c is arranged in the installation cavity 16c, and the drive system 50c is adapted to extend to be drivingly connected with the thermal circulation fan 20c and the heat dissipation fan 40c. Specifically, the installation cavity 16c includes a first installation cavity 161c provided at the rear side of the first heat dissipation air cavity 132c and communicating with the first heat dissipation air cavity 132c, and a second installation cavity 162c provided at the rear side of the second heat dissipation air cavity 133c and communicating with the second heat dissipation air cavity 133c, a first drive system 51c is arranged in the first installation cavity 161c, and the first drive system 51c is adapted to extend to be drivingly connected with the first thermal circulation fan 21c and the first heat dissipation fan 41c; a second drive system 52c is arranged in the second installation cavity 162c, and the second drive system 52c is adapted to extend to be drivingly connected with the second thermal circulation fan 22c and the second heat dissipation fan 42c. By driving the first thermal circulation fan 21c and the first heat dissipation fan 41c with the same drive system, and driving the second thermal circulation fan 22c and the second heat dissipation fan 42c with the same drive system, not only can the overall structure of the air fryer be simplified, but also the overall volume of the air fryer can be reduced, thereby reducing the space occupancy of the air fryer and effectively improving the user experience. Meanwhile, by driving the first thermal circulation fan 21c, the first heat dissipation fan 41c, the second thermal circulation fan 22c, and the second heat dissipation fan 42c with different drive systems, not only can the simultaneous cooking of the two cooking cavities be realized, but also the separate cooking of any one of the two cooking cavities can be realized, thereby meeting the user's diverse cooking needs and effectively improving the user experience.

As shown in FIG. 28 to 30, in an optional embodiment, a cold air inlet 17c communicating with the installation cavity 16c is provided at the rear side of the main body 10c, the cold air inlet 17c includes a first cold air inlet 171c and a second cold air inlet 172c arranged at intervals up and down and respectively communicating with the first installation cavity 161c and the second installation cavity 162c, the first cold air inlet 171c and the second cold air inlet 172c are adapted to correspond to at least part of the first drive system 51c and the second drive system 52c. By arranging the first cold air inlet 171c and the second cold air inlet 172c communicating with the first installation cavity 161c and the second installation cavity 162c respectively on the main body 10c, and setting the first cold air inlet 171c and the second cold air inlet 172c to correspond to the first drive system 51c and the second drive system 52c respectively, not only can the external cold air be sucked into the first installation cavity 161c and the second installation cavity 162c by the first heat dissipation fan 41c and the second heat dissipation fan 42c to dissipate heat of the control system, drive system, and other electrical components in the first installation cavity 161c and the second installation cavity 162c, but also the external cold air can contact the first drive system 51c and the second drive system 52c faster after entering the first installation cavity 161c and the second installation cavity 162c through the first cold air inlet 171c and the second cold air inlet 172c, thereby dissipating heat of the first drive system 51c and the second drive system 52c and effectively improving the heat dissipation efficiency and heat dissipation effect.

As shown in FIG. 28 to 30, in an optional embodiment, a protruding part 18c protruding outward for covering the first drive system 51c and the second drive system 52c is provided at the rear side of the main body 10c, the first cold air inlet 171c and the second cold air inlet 172c are provided on the protruding part 18c and located at the rear side of the protruding part 18c, vertically extending arc-shaped transition surfaces are provided on both sides of the rear side wall of the main body 10c adjacent to the protruding part 18c, the first air outlet 141c and the second air outlet 142c are arranged at intervals up and down on the transition surfaces. By providing the protruding part 18c at the rear side of the main body 10c and arranging the first cold air inlet 171c and the second cold air inlet 172c at the rear side of the protruding part 18c, the air fryer can not only hide the first cold air inlet 171c and the second cold air inlet 172c to improve the overall appearance of the main body 10c, but also increase the gap between the first drive system 51c, the second drive system 52c, and the outer shell of the main body 10c. This facilitates the external cold air to better and more comprehensively dissipate heat of the first drive system 51c and the second drive system 52c after entering the first installation cavity 161c and the second installation cavity 162c through the first cold air inlet 171c and the second cold air inlet 172c, effectively improving the heat dissipation efficiency and heat dissipation effect. Meanwhile, by arranging the first air outlet 141c and the second air outlet 142c at the rear side part of the main body 10c and adjacent to the protruding part 18c, the air fryer can not only hide the first air outlet 141c and the second air outlet 142c to improve the overall appearance of the main body 10c, but also use the first heat dissipation fan 41c and the second heat dissipation fan 42c to drive the flow of the cold air outside the main body 10c, thereby mixing with the circulating hot air discharged from the first air outlet 141c and the second air outlet 142c to reduce the temperature of the air discharged from the first air outlet 141c and the second air outlet 142c, avoiding scalding the user and effectively improving the user's safety.

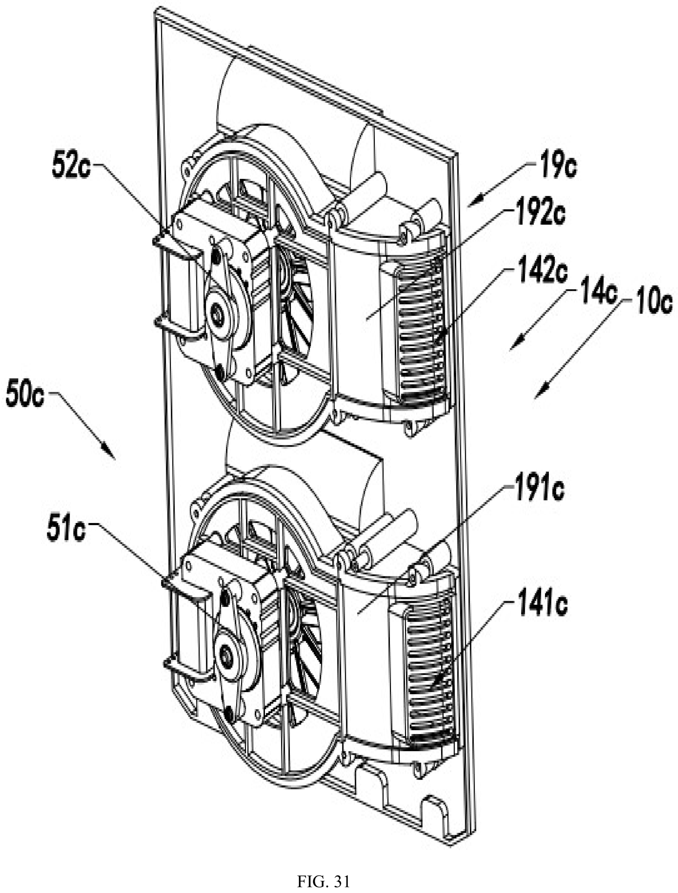

As shown in FIG. 31, in an optional embodiment, an air outlet assembly 19 is further provided in the main body 10, the air outlet assembly 19 is adapted to be made of high-temperature resistant materials such as PP, PBI, PTFE, and PI, the air outlet assembly 19 includes a first air outlet assembly 191 and a second air outlet assembly 192, the first air outlet channel 151 is provided in the first air outlet assembly 191, and the second air outlet channel 152 is provided in the second air outlet assembly 192. By arranging the first air outlet assembly 191 and the second air outlet assembly 192 made of high-temperature resistant materials in the main body, not only can the independent air outlet of the first cooking cavity 111 and the second cooking cavity 112 be realized, effectively improving the air outlet efficiency, but also the influence of the circulating hot air on the first air outlet assembly 191 and the second air outlet assembly 192 can be reduced, effectively improving the air outlet stability of the first air outlet assembly 191 and the second air outlet assembly 192 as well as the performance stability of the air fryer. As shown in FIG. 31, in an optional embodiment, the first air outlet assembly 191c and the second air outlet assembly 192c are adapted to be an integrally formed structure. By setting the first air outlet assembly 191c and the second air outlet assembly 192c as an integrally formed structure, not only can the overall structure of the air fryer be simplified, but also the structural integrity of the air fryer can be improved, thereby enhancing the performance stability and reliability of the air fryer and effectively improving the user experience.

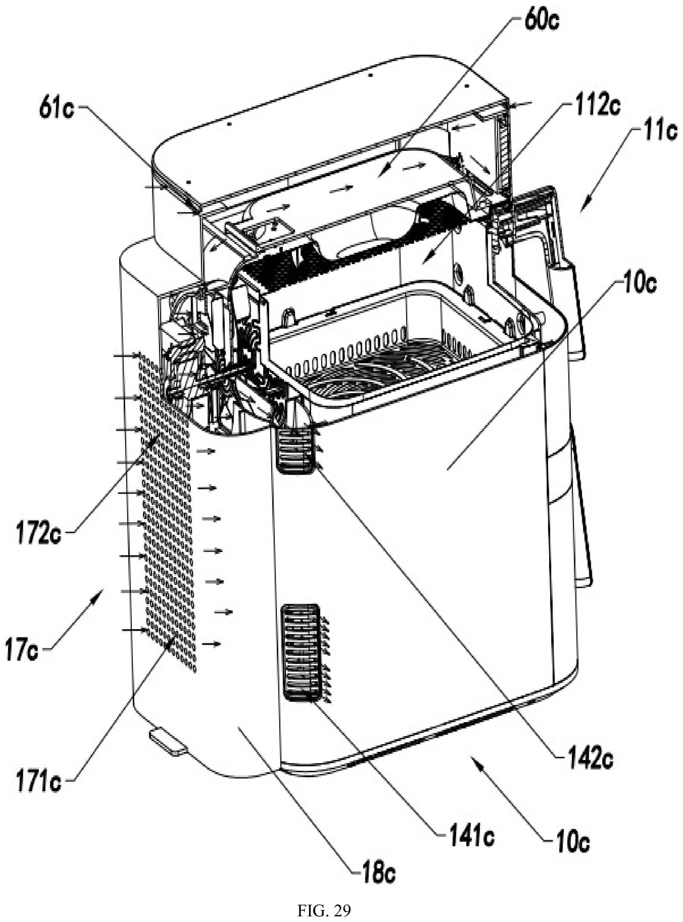

As shown in FIG. 28 and 29, in an optional embodiment, a heat dissipation air duct 60c communicating with the heat dissipation air cavity 13c is provided in the main body 10c, the heat dissipation air duct 60c is adapted to be arranged around at least part of the cooking cavity 11c, a first ventilation opening 61c and a second ventilation opening 62c communicating with the atmosphere are respectively provided at both ends of the heat dissipation air duct 60c, the first ventilation opening 61c is arranged around the peripheral edge of the top of the main body 10c, and the second ventilation opening 62c is adapted to be provided at the bottom of the main body 10c. By providing the heat dissipation air duct 60c in the main body 10c and arranging the heat dissipation air duct 60c around at least part of the cooking cavity 11c, the heat dissipation cold air in the heat dissipation air duct 60c can be used to dissipate heat of the cooking cavity 11c. This not only can reduce the outward transfer of high temperature in the cooking cavity 11c, which affects the normal operation of electrical components outside the cooking cavity 11c, but also can avoid the overheating of the main body 10c, which scalds the user, and effectively improves the user's safety. Meanwhile, by arranging the second ventilation opening 62c at the bottom of the main body 10c and the first ventilation opening 61c around the peripheral edge of the top of the main body 10c, not only can the second ventilation opening 62c be hidden to improve the overall appearance of the air fryer, but also more external cold air can enter the heat dissipation air duct 60c through the first ventilation opening 61c to dissipate heat of the main body 10c, effectively improving the heat dissipation efficiency of the air fryer.

The above content is a further detailed description of the present application in conjunction with specific preferred embodiments, and the purpose of the present application has been fully and effectively achieved. Those skilled in the art should understand that the embodiments of the present application shown in the above description and accompanying drawings are only examples and do not limit the present application. For those of ordinary skill in the art, without departing from the present application, several simple deductions or substitutions can be made, which should all be regarded as falling within the scope of patent protection determined by the claims submitted by the present application.

It should be noted that the terms used here are only intended to describe specific implementations and are not intended to limit exemplary implementations according to the present disclosure. As used herein, unless otherwise explicitly stated in the context, the singular form is also intended to include the plural form. Additionally, it should further be understood that, when the terms "comprising" and/or "including" are used in this specification, they indicate the presence of features, steps, operations, devices, assemblies and/or combinations thereof.

Unless otherwise specified specifically, the relative arrangement, numerical expressions and values of components and steps described in these embodiments do not limit the scope of the present disclosure. At the same time, it should be understood that for ease of description, the dimensions of the various parts shown in the accompanying drawings are not drawn according to an actual proportional relation. For technologies, methods, and equipment known to those of ordinary skill in the related art, detailed discussions may not be made, but in appropriate circumstances, such technologies, methods, and equipment should be considered as part of the granted specification. In all the examples shown and discussed here, any specific value should be interpreted as merely illustrative and not restrictive. Therefore, other examples of exemplary embodiments may have different values. It should be noted that: similar numerals and letters represent similar items in the following accompanying drawings. Therefore, once an item is defined in one accompanying drawing, it does not need to be further discussed in subsequent accompanying drawings.

In the description of the present disclosure, it should be understood that, directional or positional relationships indicated by directional words such as "front, rear, upper, lower, left, right", "transverse, vertical, perpendicular, horizontal", and "top, bottom" are usually based on directional or positional relationships shown in the accompanying drawings, only for the ease of describing the present disclosure and simplifying the description. In the absence of contrary explanation, these directional words do not indicate or imply that devices or elements referred to must have a specific orientation or be constructed and operated in a specific orientation, and therefore cannot be understood as limiting the scope of protection of the present disclosure; and the directional words "inner, outer" refer to the inside and outside relative to own contours of each component.

For ease of description, spatial relative terms such as "above", "over", "on the upper surface of", "on", etc. can be used here to describe the spatial positional relationship between a device or feature shown in the drawing and other devices or features. It should be understood that the spatial relative terms are intended to encompass different orientations in use or operation in addition to the orientation of the devices described in the drawings. For example, if the devices in the accompanying drawings are inverted, the device described as "over other devices or structures" or "above other devices or structures" will be then positioned as "below other devices or structures" or "under other devices or structures". Therefore, the exemplary term "over" may include two orientations: "over" and "below". The device may also be positioned in other different ways (rotated by 90 degrees or in other orientations), and corresponding explanations should be provided for the spatial relative description used here. In addition, it should be noted that the use of words such as "first" and "second" to define parts is only for the purpose of distinguishing corresponding parts conveniently. If not otherwise stated, the above words do not have a special meaning and therefore cannot be understood as limiting the scope of protection of the present disclosure.

The above provides a detailed introduction to the frying pan, the frying basket assembly and the air fryer provided in the present disclosure. Specific examples are applied herein to explain the principles and implementations of the present disclosure. The illustration of the above embodiments is only used to help understanding a method and its core idea of the present disclosure. Meanwhile, for those of ordinary skill in the art, there may be changes in the specific implementations and application scope based on the ideas of the present disclosure. In summary, the content of this specification should not be understood as limiting the present disclosure.

### Industrial Applicability

In the present application, by arranging the first cooking cavity and the second cooking cavity in the main body at intervals up and down, the present application can not only cook two types of food simultaneously to improve food cooking efficiency, but also reduce the lateral volume of the air fryer, lower the space occupancy of the air fryer, and improve the space utilization rate. Meanwhile, the air intake and air outlet of the first cooking cavity and the second cooking cavity do not interfere with each other, which effectively improves the thermal circulation efficiency in the first cooking cavity and the second cooking cavity, thereby enhancing the cooking efficiency and effectively improving the user experience. In addition, the sealing fit between the first air guide cover and the rear side wall of the first cooking cavity as well as between the second air guide cover and the rear side wall of the second cooking cavity effectively prevents the circulating hot air in the first inner concave cavity and the second inner concave cavity from leaking out of the first inner concave cavity and the second inner concave cavity, thereby avoiding affecting the normal operation of electrical components outside the first inner concave cavity and the second inner concave cavity, ensuring the normal operation of the electrical components outside the first inner concave cavity and the second inner concave cavity, and improving the performance stability and use safety of the air fryer.

## Claims

1. An air fryer, comprising a main body, wherein the main body is provided with a first cooking cavity and a second cooking cavity arranged at intervals up and down, **characterized in that**:
a first air guide cover having a first inner concave cavity is provided at the rear side of the first cooking cavity; a first thermal circulation fan is arranged in the first inner concave cavity; the first inner concave cavity extends upward to the upper part of the first cooking cavity and communicates with the upper part of the first cooking cavity; a first ventilation opening corresponding to the first thermal circulation fan is provided on the rear side wall of the first cooking cavity; a first sealing member surrounding the first inner concave cavity is provided on the first air guide cover; the first air guide cover is in sealing fit with the rear side wall of the first cooking cavity through the first sealing member;
a second air guide cover having a second inner concave cavity is provided at the rear side of the second cooking cavity; a second thermal circulation fan is arranged in the second inner concave cavity; the second inner concave cavity extends upward to the upper part of the second cooking cavity and communicates with the upper part of the second cooking cavity; a second ventilation opening corresponding to the second thermal circulation fan is provided on the rear side wall of the second cooking cavity; a second sealing member surrounding the second inner concave cavity is provided on the second air guide cover; the second air guide cover is in sealing fit with the rear side wall of the second cooking cavity through the second sealing member.

2. The air fryer according to claim 1, **characterized in that**:
a first air duct plate is provided at the top of the first cooking cavity; a first air guiding cavity with a downward opening is formed in the first air duct plate; the rear side of the first air duct plate extends into the first inner concave cavity; a first air inlet is provided at the rear side of the first air guiding cavity; the first air guiding cavity is adapted to communicate with the first inner concave cavity through the first air inlet;
a second air duct plate is provided at the top of the second cooking cavity; a second air guiding cavity with a downward opening is formed in the second air duct plate; the rear side of the second air duct plate extends into the second inner concave cavity; a second air inlet is provided at the rear side of the second air guiding cavity; the second air guiding cavity is adapted to communicate with the second inner concave cavity through the second air inlet.

3. The air fryer according to claim 2, **characterized in that** the rear side wall of the first cooking cavity and the rear side wall of the second cooking cavity are an integrally formed integral rear side wall structure; a second air duct plate installation opening is provided at the position of the integral rear side wall corresponding to the rear side of the second air duct plate; the rear side of the second air duct plate passes through the second air duct plate installation opening and extends into the second inner concave cavity; a protruding positioning column is provided at the rear side of the second air duct plate; a positioning hole matching the positioning column is provided on the integral rear side wall; the first air guide cover and the second air guide cover are an integrally formed air guide cover plate structure; the air guide cover plate is stamped at intervals up and down to form the first inner concave cavity and the second inner concave cavity; the integral rear side wall is fixedly connected with the air guide cover plate through fasteners.

4. The air fryer according to claim 2, **characterized in that**:
the projections of the first thermal circulation fan and the first air inlet on the rotation axis of the first thermal circulation fan at least partially overlap; a first air guiding fin is provided in the first air guiding cavity adjacent to the first air inlet; the first air guiding fin extends arcuately toward the middle of the first air guiding cavity; the bending direction of the first air guiding fin is opposite to the rotation direction of the first thermal circulation fan;
the projections of the second thermal circulation fan and the second air inlet on the rotation axis of the second thermal circulation fan at least partially overlap; a second air guiding fin is provided in the second air guiding cavity adjacent to the second air inlet; the second air guiding fin extends arcuately toward the middle of the second air guiding cavity; the bending direction of the second air guiding fin is opposite to the rotation direction of the second thermal circulation fan.

5. The air fryer according to claim 2, **characterized in that**:
a first flow guiding protrusion protruding downward is provided in the middle of the first air guiding cavity; the width of the first flow guiding protrusion is designed to gradually increase at least in part from the end close to the rear side to the end close to the front side;
the first flow guiding protrusion is inclined in the front-rear extension direction; the rear side of the first flow guiding protrusion is inclined toward the rotation direction of the first thermal circulation fan; a first heating element arranged around the first flow guiding protrusion is provided in the first air guiding cavity;
a second flow guiding protrusion protruding downward is provided in the middle of the second air guiding cavity; the width of the second flow guiding protrusion is designed to gradually increase at least in part from the end close to the rear side to the end close to the front side; the second flow guiding protrusion is inclined in the front-rear extension direction; the rear side of the second flow guiding protrusion is inclined toward the rotation direction of the second thermal circulation fan; a second heating element arranged around the second flow guiding protrusion is provided in the second air guiding cavity.

6. The air fryer according to any one of claims 1-5, **characterized in that**:
a first annular surrounding plate surrounding the first inner concave cavity is provided on the first air guide cover; a first inner groove is provided on the first sealing member; the first sealing member is clamped on the first annular surrounding plate through the first inner groove; a first protruding part corresponding to the first sealing member is provided on at least part of the rear side wall of the first cooking cavity; the first sealing member is at least partially in sealing fit with the first protruding part; and/or,
a second annular surrounding plate surrounding the second inner concave cavity is provided on the second air guide cover; a second inner groove is provided on the second sealing member; the second sealing member is clamped on the second annular surrounding plate through the second inner groove; a second protruding part corresponding to the second sealing member is provided on at least part of the rear side wall of the second cooking cavity; the second sealing member is at least partially in sealing fit with the second protruding part.

7. The air fryer according to any one of claims 2-6, **characterized in that**:
a first fry basket with an open top is arranged in the first cooking cavity; a first ventilation hole communicating with the first ventilation opening is provided on the side wall of the first fry basket;
a second fry basket with an open top is arranged in the second cooking cavity; a second ventilation hole communicating with the second ventilation opening is provided on the side wall of the second fry basket;
the circulating hot air generated by the first hot air circulation system and the second hot air circulation system is adapted to enter the first fry basket and the second fry basket from the open tops of the first fry basket and the second fry basket through the first air inlet and the second air inlet respectively, and flow back to the first inner concave cavity and the second inner concave cavity through the first ventilation hole, the first ventilation opening, the second ventilation hole, and the second ventilation opening respectively.

8. The air fryer according to claim 7, **characterized in that**:
a first frying plate with through holes is suspended in the first fry basket; the first ventilation hole is located below the first frying plate;
a second frying plate with through holes is suspended in the second fry basket; the second ventilation hole is located below the second frying plate;
a first accommodating groove and a second accommodating groove recessed downward are respectively provided in the middle of the first frying plate and the second frying plate;
the side parts of the first accommodating groove and the second accommodating groove are closed structures; a plurality of the through holes are provided at the bottom;
the first air guiding cavity is at least partially corresponding to the open top of the first fry basket; a first flow guiding protrusion protruding downward is provided in the middle of the first air guiding cavity; the first flow guiding protrusion is located directly above the open top of the first fry basket; the first hot air circulation system includes a first heating element; the first heating element is adapted to be arranged in the first air guiding cavity and around the first flow guiding protrusion;
the second air guiding cavity is at least partially corresponding to the open top of the second fry basket; a second flow guiding protrusion protruding downward is provided in the middle of the second air guiding cavity; the second flow guiding protrusion is located directly above the open top of the second fry basket; the second hot air circulation system includes a second heating element; the second heating element is adapted to be arranged in the second air guiding cavity and around the second flow guiding protrusion.

9. The air fryer according to claim 7, **characterized in that**:
a first recessed part recessed inward is provided at the lower part of the side wall of the first fry basket; the first ventilation hole is provided on the first recessed part; a first hot air gap communicating with the first ventilation opening is formed between the first recessed part and the inner wall of the first cooking cavity;
a second recessed part recessed inward is provided at the lower part of the side wall of the second fry basket; the second ventilation hole is provided on the second recessed part; a second hot air gap communicating with the second ventilation opening is adapted to be formed between the second recessed part and the inner wall of the second cooking cavity.

10. The air fryer according to claim 4, **characterized in that** the first air guiding fin is adapted to be arranged on the side of the first air guiding cavity biased toward the rotation direction of the first thermal circulation fan, a plurality of bendable bending parts are provided on the first air guiding fin; a plurality of fixing holes for the bending parts to pass through are provided on the first air duct plate; the bending parts are adapted to pass through the fixing holes from the bottom of the first air duct plate and be bent to abut against the top of the first air duct plate.

11. The air fryer according to claim 10, **characterized in that** a notch is provided at the end of the first air guiding fin close to the first air inlet; the notch is adapted to be an arc-shaped inner concave structure extending obliquely inward from the end of the first air guiding fin close to the first air duct plate to the end far away from the first air duct plate; and/or,
the side wall of the first air guiding cavity opposite to the first air inlet protrudes toward the first flow guiding protrusion to form a flow guiding part.

12. The air fryer according to any one of claims 1-11, **characterized in that**:
a first inner concave cavity and a first heat dissipation air cavity are sequentially provided at the rear side of the first cooking cavity; the first inner concave cavity communicates with the first cooking cavity; a first thermal circulation fan is arranged in the first inner concave cavity; a first hot air outlet is provided on the side wall of the first inner concave cavity opposite to the first thermal circulation fan; a first air outlet is provided on the side wall of the main body corresponding to the first hot air outlet; a first air outlet channel communicating with the first hot air outlet and the first air outlet is provided in the main body; a first heat dissipation fan is arranged in the first heat dissipation air cavity; the first heat dissipation air cavity is provided with a first cold air outlet communicating with the first air outlet channel;
a second inner concave cavity and a second heat dissipation air cavity are sequentially provided at the rear side of the second cooking cavity; the second inner concave cavity communicates with the second cooking cavity; a second thermal circulation fan is arranged in the second inner concave cavity; a second hot air outlet is provided on the side wall of the second inner concave cavity opposite to the second thermal circulation fan; a second air outlet is provided on the side wall of the main body corresponding to the second hot air outlet; a second air outlet channel communicating with the second hot air outlet and the second air outlet is provided in the main body; a second heat dissipation fan is arranged in the second heat dissipation air cavity; the second heat dissipation air cavity is provided with a second cold air outlet communicating with the second air outlet channel.

13. The air fryer according to claim 12, **characterized in that**:
a first enclosure forming at least part of the first heat dissipation air cavity is provided outside the first heat dissipation fan; the first cold air outlet is provided on the first enclosure;
a second enclosure forming at least part of the second heat dissipation air cavity is provided outside the second heat dissipation fan; the second cold air outlet is provided on the second enclosure;
the projections of the first cold air outlet and the first heat dissipation fan on the rotation axis of the first heat dissipation fan at least partially overlap; the projections of the second cold air outlet and the second heat dissipation fan on the rotation axis of the second heat dissipation fan at least partially overlap.

14. The air fryer according to claim 12, **characterized in that**:
a first installation cavity communicating with the first heat dissipation air cavity is provided at the rear side of the first heat dissipation air cavity; a first drive system is arranged in the first installation cavity; the first drive system is adapted to extend to be drivingly connected with the first thermal circulation fan and the first heat dissipation fan;
a second installation cavity communicating with the second heat dissipation air cavity is provided at the rear side of the second heat dissipation air cavity; a second drive system is arranged in the second installation cavity; the second drive system is adapted to extend to be drivingly connected with the second thermal circulation fan and the second heat dissipation fan;
a first cold air inlet and a second cold air inlet communicating with the first installation cavity and the second installation cavity respectively are arranged at intervals up and down at the rear side of the main body; the first cold air inlet and the second cold air inlet are adapted to correspond to at least part of the first drive system and the second drive system; a protruding part protruding outward for covering the first drive system and the second drive system is provided at the rear side of the main body; the first cold air inlet and the second cold air inlet are provided on the protruding part and located at the rear side of the protruding part; vertically extending arc-shaped transition surfaces are provided on both sides of the rear side wall of the main body adjacent to the protruding part; the first air outlet and the second air outlet are arranged at intervals up and down on the transition surfaces.

15. The air fryer according to any one of claim 12-14, **characterized in that** an air outlet assembly made of high-temperature resistant material is provided in the main body; the air outlet assembly includes a first air outlet assembly and a second air outlet assembly; the first air outlet channel is provided in the first air outlet assembly; the second air outlet channel is provided in the second air outlet assembly; the first air outlet assembly and the second air outlet assembly are adapted to be an integrally formed structure; and/or,
a heat dissipation air duct communicating with the first heat dissipation air cavity and the second heat dissipation cavity is provided in the main body; the heat dissipation air duct is adapted to be arranged around at least part of the first cooking cavity and the second cooking cavity; a first ventilation opening and a second ventilation opening communicating with the atmosphere are respectively provided at both ends of the heat dissipation air duct; the first ventilation opening is arranged around the peripheral edge of the top of the main body; the second ventilation opening is provided at the bottom of the main body.
